# EUROPÄISCHE PATENTSCHRIFT

(11) **EP 4 134 637 B1**
(45) Veröffentlichungstag und Bekanntmachung des Hinweises auf die Patenterteilung: **09.08.2023**
(21) Anmeldenummer: 21190413.1
(22) Anmeldetag: 09.08.2021
(51) Int. Cl.: G01F 23/263

(54) **KAPAZITIVE FÜLLSTANDSONDE OHNE TOTBEREICH**
CAPACITIVE LEVEL SENSOR WITHOUT DEAD ZONE
SONDE CAPACITIVE DE NIVEAU DE REMPLISSAGE SANS ZONE MORTE

(43) Veröffentlichungstag der Anmeldung: 15.02.2023
(73) Patentinhaber: Rechner Industrie-Elektronik GmbH, 68623 Lampertheim (DE)
(72) Erfinder: GEBHARDT, Stefan, 68623 Lampertheim (DE); KOHLER, Armin, 68623 Lampertheim (DE); BISCHLER, Eduard, 68623 Lampertheim (DE); TATSCH, Nikita Philip, 68623 Lampertheim (DE)
(74) Vertreter: Blumbach · Zinngrebe Patentanwälte PartG mbB

(56) Entgegenhaltungen:
- WO-A1-2004/057281
- DE-A1- 2 819 731
- DE-A1- 19 916 979
- IT-A1- UA20 164 395
- US-A- 3 119 266

## Beschreibung

Die vorliegende Erfindung betrifft ein Füllstandmessgerät sowie ein Verfahren zur kapazitiven Füllstandsmessung von Füllgut in Form von Flüssigkeiten und/oder Schüttgütern in einem Behälter mit einer von dem Behälter umfassten Gegenelektrode. Ferner umfasst die Erfindung ein Verfahren zur Kalibrierung einer Füllstandsonde für eine kapazitive Füllstandsmessung, wie zuvor genannt.

Kapazitive Füllstandsmessungen sind im Stand der Technik bekannt und basieren auf einer Erfassung eines Füllstands, d.h. einer Füllhöhe, von in einem Behälter befindlichen Flüssigkeiten und/oder Schüttgütern, indem infolge eines Befüllens des Behälters mit einem Füllgut oder infolge eines Entleerens des Behälters von Füllgut mithilfe eines kapazitiven Sensors Kapazitätsänderungen ermittelt werden. Dabei kommen Messsonden bzw. Messfühler zum Einsatz, welche im Wesentlichen senkrecht in den meist leitfähigen Behälter eingeführt werden und eine Messelektrode aufweisen. Zwischen der Messelektrode und der Behälterwand als Gegenelektrode oder einer an der Behälterwand im Wesentlichen parallel zur Messelektrode angeordneten Gegenelektrode wird eine Kondensatoranordnung gebildet. Bei steigendender bzw. abnehmender Füllhöhe des Füllguts im Behälter nimmt der Kapazitätswert der Kondensatoranordnung zu bzw. ab. Der Kapazitätswert der Kondensatoranordnung ist somit ein Maß für den Füllstand bzw. die Füllhöhe eines Füllguts im Behälter und wird im Rahmen von kapazitiven Füllstandsmessungen zur Berechnung des Füllstands verwendet.

Ist der Behälter leer bzw. mit Luft gefüllt, ergibt sich ein minimaler Kapazitätswert als Referenzwert (Grundkapazität C₀), welcher in idealer Weise als konstant betrachtet werden kann. Durch parasitäre Einflüsse, z.B. Änderung der Luftfeuchtigkeit, ergeben sich zwar Abweichungen von dieser Annahme der Konstanz. Diese Abweichungen von dem Referenzwert sind jedoch gegenüber den im Folgenden zu betrachtenden Kapazitätsänderungen meist vernachlässigbar.

Befindet sich ein Füllgut im Behälter, so erfolgt eine Kapazitätsänderung der Kondensatoranordnung in Abhängigkeit von der Füllhöhe des Füllguts, der Geometrie der Kondensatoranordnung, insbesondere des Anstands zwischen den Kondensatorplatten, sowie der Dielektrizitätszahl εᵣ des jeweiligen Füllguts. Die Begriffe Dielektrizitätszahl, Permittivitätszahl und Permittivität haben die gleiche Bedeutung und werden im Rahmen der Erfindung synonym verwendet. Eine mit der Messsonde messbare maximale Kapazitätsänderung ergibt sich bei einem, üblicherweise vorbestimmen, maximalen Füllstand des Füllguts im Behälter.

Um eine lineare Abhängigkeit zwischen der Kapazitätsänderung und der Füllhöhe eines Füllguts im Behälter zu erhalten, müssen der Behälterquerschnitt und der Durchmesser der Messsonde entlang der Messstrecke, d.h. im Messbereich in Richtung der Höhe des Behälters, gleichbleibend sein. Häufig kommen daher Messanordnungen zum Einsatz, bei denen die Messsonden in einem leitfähigen Rohr bzw. zylinderförmigen Behälter angeordnet sind, sodass sich eine Messanordnung in Form eines Zylinderkondensators ergibt. Dies hat den Vorteil, dass nur geringe Feldverzerrungen bzw. Nichtlinearitäten an den Enden der Messsonde auftreten, sodass eine Verfälschung der Messwerte am Messbereichsanfang und am Messbereichsende eher klein ausfällt und in der Regel vernachlässigt werden kann.

Die Abhängigkeit von der Permittivität der Füllgüter stellt eine Herausforderung bei kapazitiven Füllstandsmessungen dar, da die Permittivität eines Materials nur in wenigen Anwendungen als konstanter Materialparameter zu betrachten ist. Neben einem Wechsel des Füllguts und einem Mischen von verschiedenen Füllgütern führen u.a. Änderungen der Schüttdichte, Änderungen des Feuchtigkeitsgehalts und Inhomogenitäten zu signifikanten Abweichungen in der Permittivität eines Füllguts. Dies hat zur Folge, dass bei kapazitiven Füllstandsmessungen gewöhnlicherweise zunächst ein sogenannter Leerabgleich und ein sogenannter Vollabgleich durchgeführt werden muss, um die jeweiligen Endwerte messtechnisch zu erfassen. In der Regel erfolgt der Leerabgleich bei einem vollständig leeren Behälter, in manchen Messanordnungen hingegen bei einem definierten Füllstand. Ein Vollabgleich entspricht einem bis zu einem vorbestimmten maximalen Füllstand gefüllten Behälter. Meist muss der Behälter für den Leerabgleich und den Vollabgleich mehrfach befüllt und entleert werden, was recht aufwendig ist. Im Falle eines Materialwechsels des Füllguts müssen Leerabgleich und Vollabgleich erneut durchgeführt werden, da der bei einem Vollabgleich erfasste Endwert von der Permittivität des Füllguts abhängig ist.

Um die zuvor erwähnten Nachteile zu mindern, werden im Stand der Technik bereits Messanordnungen und Messverfahren zum kapazitiven Erfassen eines Füllstands mit einer Kompensation von Permittivitätsänderungen angewendet.

So beschreibt die DE 195 28 384 C2 eine kapazitive Messeinrichtung mit zwei auf einem Messfühler übereinander angeordneten Messelektroden zur kontinuierlichen Füllstandsmessung für Medien mit unterschiedlicher Dielektrizitätszahl, wobei das Prinzip des kapazitiven Spannungsteilers, auch bekannt unter dem Dreielektroden Messprinzip, benutzt wird. Eine permittivitätsunabhängige Messung ist jedoch nur im Bereich der oberen Messelektrode möglich. Zudem ist eine Schirmelektrode zwischen den zwei Messelektroden erforderlich, die einen Totbereich hinsichtlich der Füllstandsmessung darstellt.

Die DE 197 49 884 C1 der Anmelderin beschreibt eine gegenüber der DE 195 28 384 C2 verbesserte kapazitive Messeinrichtung mit einer Referenz-Elektrode als untere Messelektrode, einer oberen Messelektrode und Schirmelektroden, welche die untere und obere Messelektrode jeweils begrenzen und voneinander entkoppeln, jedoch auch einen Totbereich für die Füllstandsmessung darstellen. Gegenüber der DE 195 28 384 C2 wird eine verbesserte Kalibrierung eines Behälters im leeren Zustand unter Verwendung der Referenz-Elektrode beschrieben.

Die WO 00/26619 A1 offenbart ein Verfahren zur Füllstandsmessung basierend auf einer ersten Plattenkondensatoranordnung und einer zweiten Plattenkondensatoranordnung mit jeweils einer Messelektrode und einer Gegenelektrode als Messanordnung. Während die erste Plattenkondensatoranordnung sich zumindest über einen Teil der Füllhöhe des Behältnisses erstreckt und zur Bestimmung des aktuellen Füllstands vorgesehen ist, dient die zweite Plattenkondensatoranordnung der Bestimmung eines Referenzwerts und ist zum Ermitteln der Dielektrizitätszahl des Füllguts bis zu einer bekannten Füllstandsmarke vollständig mit Füllgut bedeckt. Unterschreitet der aktuelle Füllstand die bekannte Füllstandsmarke, so wird die zuletzt ermittelte Dielektrizitätszahl zur Bestimmung des aktuellen Füllstands verwendet. Zur Bestimmung des aktuellen Füllstands muss jedoch die Geometrie der zwei Plattenkondensatoranordnungen stets bekannt sein, die Kondensatorplatten müssen ausreichenden Abstand zueinander haben, um gegenseitige Feld-Beeinflussung zu vermeiden, und das Füllgut muss sich zwischen den zwei Kondensatorplatten befinden. Zudem kann eine Bestimmung des aktuellen Füllstands erst erfolgen, nachdem die zweite Plattenkondensatoranordnung bereits vollständig mit Füllgut bedeckt wurde.

Einen ähnlichen Ansatz verfolgt auch die DE 102 51 842 A1, welche eine Vorrichtung und ein Verfahren zur kapazitiven Füllstandsmessung durch Vergleich einer Messkapazität mit einer Referenzkapazität offenbart, wobei ein geschlossener Regelkreis als Messschaltung verwendet wird. Die Referenzkapazität hat eine bekannte Geometrie und ist stets vollständig von Füllgut umgeben. Darauf basierend wird eine relative Permittivität εᵣ des entsprechenden Füllguts ermittelt, welche wiederum zur Bestimmung des Füllstands herangezogen wird.

Die EP 3 457 095 A1 betrifft einen kapazitiven Füllstandsensor und ein Verfahren zur kapazitiven Messung des Füllstands eines Mediums in einem Behälter mit Kompensation von Umgebungseinflüssen. Der Füllstandssensor umfasst eine Messsonde mit mindestens einer Messelektrode zur Erfassung einer Kapazität und zur Berechnung eines Füllstands und mindestens einer im Inneren der Messsonde angeordneten Referenzelektrode für eine füllstandunabhängige Kapazitätsmessung, um damit auf die Kapazitätsmessung an der Messelektrode einwirkende Umgebungseinflüsse wie Temperatur und Feuchtigkeit zu kompensieren. Die Messsonde kann mehrere in Längsrichtung übereinander angeordnete Segmente umfassen, welche jeweils eine Messelektrode und eine Referenzelektrode aufweisen.

Die EP 2 735 851 A1 der Anmelderin offenbart ein Verfahren und eine Vorrichtung zur kapazitiven Füllstandsmessung mit einer Messschaltung und einer Füllstandsonde. An der Füllstandsonde ist eine als Messelektrode fungierende erste Elektrodenanordnung, welche eine Messstrecke definiert, ausgebildet. An wenigstens einem Ende dieser Messstrecke ist eine als Begrenzungselektrode fungierende zweite Elektrodenanordnung angeordnet. Vorzugsweise ist an beiden Endpunkten der Messstrecke jeweils eine solche zweite Elektrodenanordnung vorgesehen, welche jeweils eine Messstreckenbegrenzung definiert. Die Messschaltung besitzt eine Differenzschaltung, sodass zur Kompensation der durch Permittivitätsänderungen des Füllguts hervorgerufenen systematischen Verfälschungen ein Differenzsignal einer Kapazitätsänderung zwischen einer jeweiligen Begrenzungselektrode und einer Gegenelektrode, z.B. der Behälterwand, und einer Kapazitätsänderung zwischen einer Messelektrode und dieser Gegenelektrode gebildet wird.

Die WO 2020/113283 A1 offenbart ein kapazitives Sensorsystem und ein Verfahren zur Identifizierung eines Objekts basierend auf dem Erfassen von Materialeigenschaften, z.B. des Dipolmoments oder der Permittivität, dieses Objekts. Das kapazitive Sensorsystem umfasst ein kapazitives Sensorpad, ein leitfähiges Unterscheidungspad nahe des Erfassungspads, einen Schalter, eine Kapazitätsmessschaltung und eine Steuerung. Der Schalter koppelt das Unterscheidungspad selektiv an ein Spannungspotential des kapazitiven Sensorpads oder an ein Massepotential. Die Kapazitätsmessschaltung erfasst einen Kapazitätswert des kapazitiven Sensorpads. Die Steuerung ist betreibbar, um den Kapazitätswert des kapazitiven Sensorpads zu messen, wenn das Unterscheidungspad mit dem Spannungspotential des kapazitiven Sensorpads oder mit dem Massepotential verbunden ist. Um die Materialeigenschaften, beispielsweise die Permittivität, eines Objekts bestimmen zu können, muss das kapazitive Sensorpad vollständig von dem zu identifizierenden Objekt bedeckt sein.

Die WO 2004/057281 A1 betrifft eine Vorrichtung zur Kapazitätsmessung mit einer Elektrodenanordnung bestehend aus einer Vielzahl von nebeneinander und/oder hintereinander auf einem Träger angeordneten Elektroden, einer Messeinrichtung zum Messen der Kapazität zwischen einer ersten Elektrode als Messelektrode und einer zweiten Elektrode als Gegenelektrode, sowie einer steuerbaren Schalteinrichtung zum vorgebbar schaltbaren Verbinden der Elektroden als erste und zweite Elektroden mit der Messeinrichtung. Durch die Schalteinrichtung gesteuert ist abwechselnd jede Elektrode der Elektrodenanordnung als Messelektrode schaltbar und jeweils mindestens eine der weiteren Elektroden als Gegenelektrode auf ein vorgebbares Bezugspotential schaltbar. Ferner wird ein Verfahren und eine Einrichtung zum Ermitteln des Füllstandes einer Flüssigkeit mit einer solchen Vorrichtung beschrieben.

Die IT UA20 164 395 A1 offenbart eine Vorrichtung und ein Verfahren zur kapazitiven Füllstandmessung, wobei die Vorrichtung einen Träger mit einer Vielzahl von auf dem Träger angeordneten, komplanar zueinander angeordneten und voneinander beabstandeten Elektroden umfasst, die sich ihrer Länge nach nebeneinander entlang der Füllstandänderungsrichtung erstrecken. Die Elektroden, die zu einer ausgewählten Messelektrode benachbart sind, werden auf Masse oder auf ein bestimmtes anderes Potential, und somit als Gegenelektrode zu der Messelektrode, geschaltet. Ferner ist zumindest eine Referenzelektrode an einem Ende des Trägers vorgesehen. Ein Differenzwert, welcher einer Differenz eines Messwerts einer jeweiligen Messelektrode und eines Messwerts der Referenzelektrode entspricht, wird mit einem relativen Referenzschwellwert verglichen, um festzustellen, ob die jeweilige Messelektrode von flüssigem Medium umgeben ist.

Die DE 199 16 979 A1 bezieht sich auf ein Verfahren zur Füllstandsmessung sowie auf einen Füllstandssensor mit einer Vielzahl nebeneinander entlang einer Füllstrecke angeordneten kapazitiven Sensoren, die aus Feldelektroden und diametral gegenüberliegenden Messelektroden bestehen. Das Verfahren umfasst ein Beaufschlagen eines Sensors mit einem Messsignal und eines benachbarten Sensors mit einem phasenverschobenen Messsignal, ein Messen der resultierenden Signale an den beaufschlagten Sensoren, ein Bestimmen der Phasenverschiebung zwischen den resultierenden Signalen und ein Ermitteln des Füllstands in Abhängigkeit von der Phasenverschiebung.

Vor dem Hintergrund des zuvor aufgeführten Standes der Technik ist es eine Aufgabe der Erfindung, ein Füllstandmessgerät sowie ein Verfahren zur kapazitiven Füllstandsmessung von Füllgut bereitzustellen, mit welchem die Bestimmung eines Füllstands basierend auf gemessenen Kapazitäten gegenüber dem genannten Stand der Technik verbessert und vereinfacht wird und insbesondere im Wesentlichen kontinuierlich, permittivitätsunabhängig und ohne Totbereiche entlang der Messstrecke erfolgt.

Zumindest eine der zuvor genannten Aufgaben wird durch die Merkmale des unabhängigen Anspruchs 1 und der unabhängigen Verfahrensansprüche 5 und 7 gelöst sowie durch die weiteren Merkmale der jeweiligen Unteransprüche ausgestaltet und weiterentwickelt.

Entsprechend schlägt die Erfindung ein Füllstandmessgerät zur kapazitiven Füllstandsmessung von Füllgut in Form von Flüssigkeiten und/oder Schüttgütern in einem Behälter mit einer von dem Behälter umfassten Gegenelektrode vor, welches eine Messelektronik und eine an die Messelektronik anschließbare Füllstandsonde umfasst. An der Füllstandsonde sind eine erste Elektrode und eine zweite Elektrode ausgebildet, welche zur Füllstandsmessung in den Behälter einzubringen sind und sich im eingebrachten Zustand ihrer Länge nach nacheinander und voneinander beabstandet in den Behälter hinein und im Wesentlichen parallel zu der Gegenelektrode erstrecken, sodass bei einem Befüllen des Behälters zuerst die erste Elektrode mit Füllgut bedeckt ist, bevor die zweite Elektrode zumindest teilweise mit Füllgut bedeckt ist. Durch den gesamten, zwischen einem ersten, von der zweiten Elektrode entfernten Ende der ersten Elektrode und einem zweiten, von der ersten Elektrode entfernten Ende der zweiten Elektrode gebildeten Bereich ist eine Messstrecke definiert.

Die Messelektronik ist zum Bereitstellen eines Messpotentials, eines Schirmpotentials und eines Gegenelektrodenpotentials eingerichtet. Dazu umfasst die Messelektronik ein Umschaltwerk mit einem ersten, mit der ersten Elektrode elektrisch verbindbaren Umschalter und einem zweiten, mit der zweiten Elektrode elektrisch verbindbaren Umschalter. Zum Betreiben des Füllstandmessgerätes ist ein erster, zweiter oder dritter Messmodus durch das Umschaltwerk einstellbar, indem der erste Umschalter zum Umschalten zwischen dem an der ersten Elektrode anlegbaren Messpotential oder Schirmpotential ausgebildet ist und der zweite Umschalter zum Umschalten zwischen dem an der zweiten Elektrode anlegbaren Messpotential oder Schirmpotential ausgebildet ist. Im ersten Messmodus ist das Messpotential an der ersten Elektrode und das Schirmpotential an der zweiten Elektrode angelegt. Im zweiten Messmodus ist das Schirmpotential an der ersten Elektrode und das Messpotential an der zweiten Elektrode angelegt, während im dritten Messmodus das Messpotential an der ersten und an der zweiten Elektrode angelegt ist. In jedem der drei Messmodi ist das Gegenelektrodenpotential an der Gegenelektrode angelegt. Die Messelektronik umfasst zudem eine mit dem Umschaltwerk elektrisch verbundene Auswerteeinheit, welche zur Steuerung des Umschaltwerks und zur Berechnung des Füllstands basierend auf in der Messelektronik gegenüber einem vollständig leeren Behälter in jedem der drei Messmodi gemessenen relativen Kapazitätsänderungen eingerichtet ist.

Der Begriff der kapazitiven Füllstandsmessung ist im Rahmen der Erfindung derart aufzufassen, dass der Füllstand basierend auf gemessenen Kapazitätswerten, insbesondere gemessenen relativen Kapazitätsänderungen, bestimmt, und zwar insbesondere berechnet, wird.

Der Füllstand bezieht sich im Rahmen der Erfindung stets auf die Füllhöhe eines Füllguts oder mehrerer Füllgüter in dem Behälter. Ist der Füllstand anhand von gemessenen relativen Kapazitätsänderungen bestimmt worden, kann bei bekannter Geometrie des Behälters das diesem Füllstand entsprechende von dem Füllgut bzw. den Füllgütern im Behälter eingenommene Füllvolumen berechnet werden.

Eine von dem Behälter umfasste Gegenelektrode kann im Rahmen der Erfindung eine an einer Behälterwand angebrachte Gegenelektrode, eine innerhalb des Behälters bzw. im Inneren des Behälters angeordnete Gegenelektrode oder aber die Behälterwand als Gegenelektrode sein. Zwingend erforderlich ist, dass die Gegenelektrode im Betrieb des Füllstandmessgeräts stets im Wesentlichen parallel zu der ersten und zweiten Elektrode angeordnet ist.

Die erste Elektrode kann entsprechend der oben aufgeführten Beschreibung als untere Messelektrode und die zweite Elektrode als obere Messelektrode betrachtet werden. Im Gegensatz zu Dokumenten des zuvor genannten Standes der Technik, welche im unteren Bereich der Füllstandsonde eine Referenzelektrode zur Bestimmung einer Permittivität eines im Behälter befindlichen Füllguts vorsehen, ermöglicht das erfindungsgemäße Füllstandmessgerät die Erfassung eines Füllstands über einen deutlich größeren Messbereich und insbesondere auch im unteren Bereich des Behälters, d.h. bei niedrigeren Füllständen.

Die Messstrecke der Füllstandsonde erstreckt sich gemäß der vorhergehenden Beschreibung über den gesamten Bereich zwischen dem ersten, von der zweiten Elektrode entfernten Ende der ersten Elektrode, d.h. dem unteren Endpunkt der ersten Elektrode, und dem zweiten, von der ersten Elektrode entfernten Ende der zweiten Elektrode, d.h. dem oberen Endpunkt der zweiten Elektrode. Dies ist dadurch gewährleistet, dass trotz elektrischer Trennung von erster und zweiter Elektrode der Abstand zwischen der ersten und der zweiten Elektrode in Richtung der Füllhöhe des Füllguts so gering wie möglich gewählt ist, damit die Messstrecke bei einem Zusammenschalten der ersten und zweiten Elektrode als Messelektroden möglichst keine, zumindest keine die Messung beeinflussende, Unterbrechung aufweist, resultierend in einem quasi durchgehend kontinuierlichen Messbereich zur kontinuierlichen Bestimmung des Füllstands entlang der Messstrecke ohne Totbereiche.

Mit Hilfe des Umschaltwerks kann das Füllstandmessgerät in drei verschiedenen Messmodi betrieben werden. Ein Messmodus ist durch den jeweiligen Zustand des ersten und zweiten Umschalters festgelegt und definiert sich dadurch, an welcher der ersten und/oder zweiten Elektrode jeweils das Messpotential angelegt ist. Die infolge einer Änderung des Füllstands auftretenden relativen Kapazitätsänderungen gegenüber einem leeren Behälter können somit entsprechend der drei Messmodi in einer Kondensatoranordnung erfasst werden, welche die Gegenelektrode und die erste Elektrode und/oder die zweite Elektrode als Messelektrode mit daran angelegtem Messpotential umfasst. Dies ermöglicht eine genauere, weniger fehlerbehaftete Berechnung des Füllstands im Vergleich zu einem Füllstandmessgerät, welches lediglich in einem Messmodus betreibbar ist bzw. welches jeweils nur eine aktive Messelektrode umfasst.

Darüber hinaus schlägt die Erfindung ein Verfahren zur kapazitiven Füllstandsmessung von Füllgut in Form von Flüssigkeiten und/oder Schüttgütern in einem Behälter mit einer von dem Behälter umfassten Gegenelektrode vor, wobei nach Einbringen einer Füllstandsonde mit einer ersten Elektrode und einer zweiten Elektrode zur Füllstandsmessung in den Behälter bei einem Befüllen des Behälters zuerst die erste Elektrode mit Füllgut bedeckt wird, bevor die zweite Elektrode zumindest teilweise mit Füllgut bedeckt wird, und die erste und die zweite Elektrode sich ihrer Länge nach nacheinander und voneinander beabstandet in den Behälter hinein und im Wesentlichen parallel zu der Gegenelektrode erstrecken. Durch den gesamten, zwischen einem ersten, von der zweiten Elektrode entfernten Ende der ersten Elektrode und einem zweiten, von der ersten Elektrode entfernten Ende der zweiten Elektrode gebildeten Bereich ist eine Messstrecke definiert. Nach Durchführung der Schritte eines Bereitstellens eines Messpotentials, Schirmpotentials und Gegenelektrodenpotentials mit angeschlossener erster und zweiter Elektrode sowie angeschlossener Gegenelektrode an eine Messelektronik und mit angelegtem Gegenelektrodenpotential an die Gegenelektrode sowie kalibrierter Füllstandsonde, insbesondere nach dem Durchführen der Kalibrationsmessung gemäß dem zuvor beschriebenen Verfahren zur Kalibrierung der Füllstandsonde, umfasst das erfindungsgemäße Verfahren die folgenden Schritte:
- Betreiben der ersten und zweiten Elektrode in einem ersten, zweiten oder dritten Messmodus durch Umschalten zwischen einem an die erste und zweite Elektrode der Füllstandsonde jeweils anzulegenden Messpotential oder Schirmpotential, wobei im ersten Messmodus das Messpotential an der ersten Elektrode und das Schirmpotential an der zweiten Elektrode, im zweiten Messmodus das Schirmpotential an die erste Elektrode und das Messpotential an die zweite Elektrode und im dritten Messmodus das Messpotential an die erste und an die zweite Elektrode angelegt wird, und
- Durchführen wenigstens einer Füllstandsmessung, wobei relative Kapazitätsänderungen gegenüber einem vollständig leeren Behälter bei einem Befüllen des Behälters und/oder bei einem Entleeren des Behälters in jedem der drei Messmodi gemessen und zur Berechnung des Füllstands herangezogen werden.

Das zuvor beschriebene Verfahren setzt voraus, dass die zur Füllstandsmessung verwendete Füllstandsonde vor Beginn der Füllstandsmessung bereits kalibriert ist. Eine Kalibrierung der Füllstandsonde kann insbesondere im Rahmen des erfindungsgemäßen Verfahrens zur Kalibrierung der Füllstandsonde erfolgen. Dieses Verfahren unterscheidet sich von dem zuvor beschriebenen Verfahren zur kapazitiven Füllstandsmessung im Wesentlichen dadurch, dass der Schritt des Durchführens wenigstens einer Füllstandsmessung durch den Schritt des Durchführens einer Kalibrationsmessung zur Kalibrierung der Füllstandsonde ersetzt wird, wobei relative Kapazitätsänderungen zwischen einem vollständig leeren Behälter und einem maximalen Füllstand, insbesondere einem Füllstand bis zu dem zweiten, von der ersten Elektrode entfernten Ende der zweiten Elektrode, im zumindest ersten und dritten Messmodus ermittelt werden.

Alternativ zu einer Kalibrierung der Füllstandsonde gemäß dem erfindungsgemäßen Kalibrierverfahren kann im erfindungsgemäßen Verfahren zur kapazitiven Füllstandsmessung auch eine bereits vorab kalibrierte Füllstandsonde verwendet werden. Unter einer vorab kalibrierten Füllstandsonde ist im Rahmen der Erfindung eine Füllstandsonde zu verstehen, zu welcher zumindest Informationen über die Längenverhältnisse zwischen der ersten Elektrode und der zweiten Elektrode vorliegen, wobei die Längen der ersten und zweiten Elektrode entsprechenden Füllguthöhen zugeordnet werden können. Die Informationen über die Längenverhältnisse können beispielsweise abgeschätzt oder durch experimentelles Bestimmen erhalten werden oder sind bereits als Voreinstellung in der Füllstandsonde hinterlegt. Darüberhinausgehende Informationen, welche durch eine vorab durchgeführte Kalibrierung erhalten werden, sind für die Durchführung der Füllstandsmessung zur Berechnung des jeweiligen Füllstands nicht zwingend erforderlich. So muss zur Bestimmung des jeweils aktuellen Füllstands insbesondere keine Permittivität von Füllgütern im Rahmen der Kalibrierung der Füllstandsonde erfasst werden, sodass die Durchführung der Füllstandsmessung permittivitätsunabhängig erfolgen kann.

Ein weiterer Vorteil des erfindungsgemäßen Verfahrens zur kapazitiven Füllstandmessung ist, dass sich die während der Kalibrierung der Füllstandsonde verwendete Geometrie der Messanordnung, z.B. der Abstand der ersten und zweiten Elektrode von der Behälterwand, der Abstand der ersten und zweiten Elektrode von der Gegenelektrode und die Position der Füllstandsonde im Behälter, von der während der Füllstandsmessung vorliegenden Geometrie der Messanordnung unterscheiden kann. Somit müssen die Kalibrierung der Füllstandsonde und die Füllstandsmessung nicht notwendigerweise in derselben Messanordnung durchgeführt werden. Dies ermöglicht u.a., dass der Behälter und/oder die Gegenelektrode nach erfolgter Kalibrierung der Füllstandsonde für die Füllstandsmessung ausgetauscht werden bzw. wird, beispielsweise im Falle eines Defekts, ohne dass daraufhin eine erneute Kalibrierung der Füllstandsonde in der veränderten Geometrie der Messanordnung vonnöten ist.

Bevorzugte Ausführungsformen und Weiterentwicklungen sind Gegenstand der anhängigen abhängigen Ansprüche.

Demgemäß können die jeweils im Verfahren zur kapazitiven Füllstandsmessung und/oder im Verfahren zur Kalibrierung der Füllstandsonde angewendeten Messmodi jeweils zyklisch durchlaufen werden.

Im Verfahren zur kapazitiven Füllstandsmessung können zumindest ein erster und/oder ein zweiter Schwellwert des Füllstands detektiert werden, welche zu der Bestimmung des aktuellen Füllstands beitragen können.

Ferner können zumindest zwei verschiedene Algorithmen während der Füllstandsmessung ausgeführt werden, wobei zum Berechnen eines jeweils aktuellen Füllstands in Abhängigkeit von den hierzu gemessenen relativen Kapazitätsänderungen der jeweils auszuführende Algorithmus ausgewählt wird.

Zusammenfassend betrifft die Erfindung ein Füllstandmessgerät und ein Verfahren zur kapazitiven Füllstandsmessung von Füllgut in einem Behälter und darin umfasster Gegenelektrode mittels einer Füllstandsonde sowie ein Verfahren zur Kalibrierung einer Füllstandsonde.

An der in den Behälter einzubringenden Füllstandsonde sind eine erste und eine zweite Elektrode voneinander beabstandet und sich nacheinander sowie im Wesentlichen parallel zur Gegenelektrode erstreckend ausgebildet, sodass eine Messstrecke entlang der ersten und zweiten Elektrode sowie des dazwischenliegenden Abstands definiert ist.

Die Füllstandsonde ist in einem ersten, zweiten oder dritten Messmodus betreibbar, indem zwischen einem an die erste und zweite Elektrode jeweils anlegbaren Messpotential oder Schirmpotential umgeschaltet werden kann und an der Gegenelektrode stets ein Gegenelektrodenpotential angelegt ist. Zur Kalibrierung der Füllstandsonde werden relative Kapazitätsänderungen zwischen einem leeren Behälter und einem maximalen Füllstand ermittelt. Zur kapazitiven Füllstandsmessung werden mit einer kalibrierten Füllstandsonde in jedem der drei Messmodi gemessene relative Kapazitätsänderungen gegenüber einem leeren Behälter zur Berechnung des Füllstands herangezogen.

Die Erfindung wird nachfolgend anhand einiger bevorzugter jedoch lediglich beispielhafter Ausführungsformen unter Bezugnahme auf die beigefügten Zeichnungen näher beschrieben. In den Zeichnungen zeigen:
- Fig. 1: eine schematische Schnittansicht einer in einem Behälter eingebrachten Füllstandsonde eines erfindungsgemäßen Füllstandmessgeräts gemäß einer ersten Ausführungsform,
- Fig. 2: eine schematische Schnittansicht einer in einem Behälter eingebrachten Füllstandsonde eines erfindungsgemäßen Füllstandmessgeräts gemäß einer zweiten Ausführungsform,
- Fig. 3: eine schematische Ansicht einer Messanordnung eines erfindungsgemäßen Füllstandmessgeräts mit einer im ersten Messmodus befindlichen Messelektronik,
- Fig. 4: eine schematische Ansicht einer Messanordnung eines erfindungsgemäßen Füllstandmessgeräts mit einer im zweiten Messmodus befindlichen Messelektronik,
- Fig. 5: eine schematische Ansicht einer Messanordnung eines erfindungsgemäßen Füllstandmessgeräts mit einer im dritten Messmodus befindlichen Messelektronik,
- Fig. 6: eine schematische Ablaufskizze eines erfindungsgemäßen Verfahrens zur kapazitiven Füllstandsmessung,
- Fig. 7: eine schematische Ansicht der gemessenen relativen Kapazitätsänderungen im ersten, zweiten und dritten Messmodus in Abhängigkeit von der Füllguthöhe im Behälter,
- Fig. 8: eine schematische Ansicht eines bei einem Befüllen des Behälters berechneten Füllstands in Abhängigkeit von der Füllguthöhe im Behälter, und
- Fig. 9: eine schematische Ansicht eines bei einem Entleeren des Behälters berechneten Füllstands in Abhängigkeit von der Füllguthöhe im Behälter.

Nachfolgend werden unter Bezugnahme auf die Zeichnungen bevorzugte Ausführungsformen im Rahmen der Erfindung beschrieben.

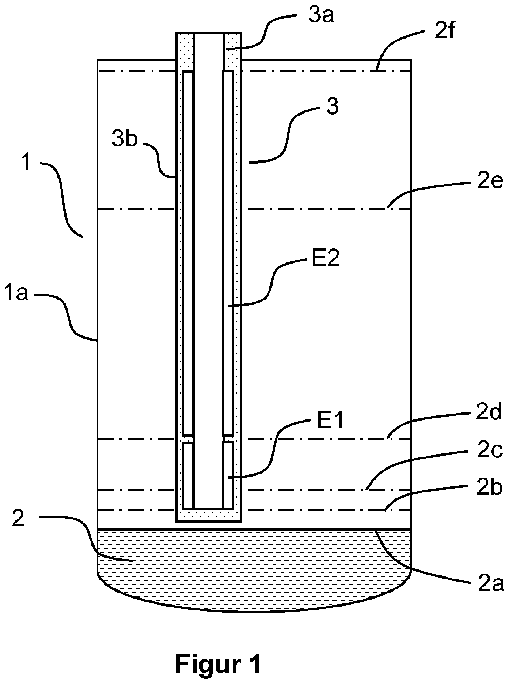

Figur 1 zeigt eine beispielhafte schematische Schnittansicht einer in einem Behälter 1 eingebrachten Füllstandsonde 3 eines erfindungsgemäßen Füllstandmessgeräts zur kapazitiven Füllstandsmessung von Füllgut 2 in Form von Flüssigkeiten und/oder Schüttgütern gemäß einer ersten Ausführungsform. Figur 1 dient dazu, einen beispielhaften Aufbau und eine beispielhafte Einbauposition der im Behälter 1 eingebrachten Füllstandsonde 3 darzustellen sowie beispielhafte Füllstände 2a, 2b, 2c, 2d, 2e, 2f eines Füllguts 2 anzuzeigen.

Der Behälter 1 umfasst gemäß Figur 1 eine Gegenelektrode, wobei im dargestellten Beispiel die Wand 1a des Behälters I, d.h. die Behälterwand 1a, als Gegenelektrode ausgebildet ist. In weiteren, nicht gezeigten AusfÜhrungsformen kann die Gegenelektrode jedoch auch an der Behälterwand 1a angebracht oder im Inneren des Behälters 1 angeordnet sein.

In Figur 1 ist die Füllstandsonde 3 im Wesentlichen vertikal in dem Behälter 1 montiert. An der Füllstandsonde 3 sind eine erste Elektrode E1 und eine zweite Elektrode E2 ausgebildet. In Figur 1 umfasst die Füllstandsonde 3 beispielhaft einen Träger 3a, insbesondere bestehend aus und/oder vorzugsweise umschlossen von mindestens einem elektrisch isolierenden Material 3b, auf welchem die erste und die zweite Elektrode E1, E2 entlang ihrer Längsrichtung angebracht sind. Im dargestellten Beispiel ist dieser Träger 3a als Stab ausgebildet, kann aber in einer alternativen Ausführungsform auch beispielsweise als Platte ausgebildet sein.

Die erste Elektrode E1 und die zweite Elektrode E2 erstrecken sich im in dem Behälter 1 eingebrachten Zustand gemäß Figur 1 ihrer Länge nach nacheinander und voneinander beabstandet in den Behälter 1 hinein und im Wesentlichen parallel, und somit auch äquidistant, zu der Gegenelektrode, und zwar derart, dass bei einem Befüllen des Behälters 1 zuerst die erste Elektrode E1 mit Füllgut 2 bedeckt ist, bevor die zweite Elektrode E2 zumindest teilweise mit Füllgut 2 bedeckt ist. Die erste Elektrode E1 kann somit im in dem Behälter 1 eingebrachten Zustand als untere Elektrode bezeichnet werden und die zweite Elektrode E2 als obere Elektrode bezeichnet werden. Durch den gesamten, zwischen einem ersten, von der zweiten Elektrode E2 entfernten Ende der ersten Elektrode Et und einem zweiten, von der ersten Elektrode E1 entfernten Ende der zweiten Elektrode E2 gebildeten Bereich ist eine Messstrecke definiert. Das erste, von der zweiten Elektrode E2 entfernte Ende der ersten Elektrode E1 entspricht einem unteren Endpunkt der Messtrecke und das zweite, von der ersten Elektrode E1 entfernte Ende der zweiten Elektrode E2 entspricht einem oberen Endpunkt der Messstrecke. Die Messstrecke schließt somit auch den Bereich ein, in welchem die erste Elektrode E1 und die zweite Elektrode E2 voneinander beabstandet sind. Dies ist gewährleistet, indem der sich in Richtung der Füllhöhe erstreckende Abstand zwischen der ersten E1 und der zweiten Elektrode E2 trotz elektrischer Trennung zwischen erster und zweiter Elektrode E1, E2 so gering wie möglich gewählt ist, damit die Messstrecke bei einem Zusammenschalten der ersten und zweiten Elektrode E1, E2 als Messelektroden zumindest nahezu keine messtechnisch erkennbare Unterbrechung aufweist, resultierend in einem quasi durchgehend kontinuierlichen Messbereich zur kontinuierlichen Bestimmung eines Füllstands entlang der Messstrecke ohne Totbereiche. Dies ist in praktischer Umsetzung insbesondere dann der Fall, wenn das resultierende elektrische Feld der ersten und zweiten Elektrode E1, E2 zur Gegenelektrode möglichst kontinuierlich ist, d.h. die elektrischen Felder zwischen erster Elektrode E1 und Gegenelektrode sowie zwischen zweiter Elektrode E2 und Gegenelektrode sich überlappen, zumindest aber aneinandergrenzen. Hinsichtlich der Wahl des Abstands zwischen erster und zweiter Elektrode E1, E2 bedingt das Erfordernis der elektrischen Trennung zwischen erster und zweiter Elektrode E1, E2 einen unteren Grenzwert, während die Anforderung einer möglichst unterbrechungsfreien Messstrecke einen oberen Grenzwert bedingt. Ein akzeptabler Abstand zwischen erster und zweiter Elektrode E1, E2 ergibt sich somit zweckmäßiger Weise im Wesentlichen aus der Geometrie der Füllstandsonde und ist vorzugsweise kleiner als die Hälfte der Breite bzw. des Durchmessers der ersten und/oder der zweiten Elektrode E1, E2. In Figur 1 beträgt der Abstand zwischen erster Elektrode E1 und zweiter Elektrode E2 etwa 1 mm. Jedoch sind auch Ausführungsformen denkbar, in denen der Abstand größer oder sogar kleiner ist.

Die erste Elektrode E1 hat eine erste Länge L1 und die zweite Elektrode hat eine zweite Länge L2, wobei die zweite Länge L2 der zweiten Elektrode E2 im Beispiel der Figur 1 um etwa den Faktor 5 größer als die erste Länge L1 der ersten Elektrode E1 ist. Die zweite Länge L2 kann in einer alternativen Ausführungsforim insbesondere gleich groß wie die erste Länge L1 oder um einen von dem zuvor genannten Faktor verschiedenen Faktor größer als die erste Länge L1 sein. Ist die zweite Länge L2 größer als die erste Länge L1, sodass die zweite Länge L2 einen größeren Anteil an der gesamten Messstrecke als die erste Länge L1 hat, hat dies insbesondere bei einer Füllstandsmessung während des Befüllens des Behälters 1 den Vorteil, dass über einen größeren Messbereich der zweiten Elektrode E2 eine genauere Erfassung von relativen Kapazitätsänderungen, und folglich eine genauere, weniger fehlerbehaftete Berechnung des jeweiligen Füllstands, erfolgen kann. Der Messbereich der zweiten Elektrode E2 beschreibt den Messbereich in einer Kondensatoranordnung bestehend aus Gegenelektrode und zweiter Elektrode E2 als Messelektrode, während der Messbereich der ersten Elektrode Et den Messbereich in einer Kondensatoranordnung bestehend aus Gegenelektrode und erster Elektrode E1 als Messelektrode beschreibt. Wird beim Befüllen des Behälters 1 eine Füllstandsmessung im Messbereich der zweiten Elektrode E2 durchgeführt, so stehen zusätzlich zu den daraus resultierenden gemessenen relativen Kapazitätsänderungen auch im Messbereich der ersten Elektrode E1 gemessene relative Kapazitätsänderungen als Messergebnisse zur Berechnung des aktuellen Füllstands zur Verfügung. Da die erste und zweite Länge L1, L2 der ersten und zweiten Elektrode E1, E2 in Richtung der Füllguthöhe verlaufen, können diese Längen entsprechenden Füllguthöhen im Behälter 1 zugeordnet werden.

Alternativ zu der in Figur 1 gezeigten Ausführungsforim können die erste und/oder die zweite Elektrode auch als einzelne Ringe oder Platten mit einem Isolator aufgebaut sein.

Weiterhin zeigt Figur 1 verschiedene mögliche Füllstände 2a, 2b, 2c, 2d, 2e, 2f eines Füllguts 2 in dem Behälter 1. Der unterhalb der ersten Elektrode E1 liegende Füllstand 2a bezeichnet einen Füllstand, welcher deutlich außerhalb des Messbereichs der Füllstandsonde 3 liegt, wobei der Messbereich der Füllstandsonde 3 im Wesentlichen in einer Kondensatoranordnung zwischen der Gegenelektrode und der Messtrecke ausgebildet ist. Demnach kann der Füllstand 2a von der in Figur 1 gezeigten Füllstandsonde 3 messtechnisch in der Regel nicht erfasst werden.

Bei einem Füllstand 2b kann in einer Kondensatoranordnung bestehend aus Gegenelektrode und erster Elektrode E1 als Messelektrode bereits eine relative Kapazitätsänderung gegenüber einem vollständig leeren Behälter 1 gemessen werden. Die Größe der relativen Kapazitätsänderung ist jeweils von der Permittivität des Füllguts 2 abhängig.

Der Füllstand 2c entspricht einem Füllstand, welcher im Messbereich der ersten Elektrode E1 liegt, sodass in der Kondensatoranordnung bestehend aus Gegenelektrode und erster Elektrode E1 als Messelektrode eine relative Kapazitätsänderung gegenüber einem vollständig leeren Behälter 1 messbar ist. Wird nicht die erste Elektrode E1, sondern nur die zweite Elektrode E2 als Messelektrode betrieben, so ist bei einem Füllstand 2c keine relative Kapazitätsänderung gegenüber einem vollständig leeren Behälter 1 messbar.

Der Füllstand 2d entspricht einem Füllstand, der in einem Bereich liegt, in welchem die erste Elektrode E1 und die zweite Elektrode E2 elektrisch voneinander isoliert und beabstandet sind. Somit ist die erste Elektrode E1 bei dem Füllstand 2d vollständig mit Füllgut 2 bedeckt. Die in der Kondensatoranordnung bestehend aus Gegenelektrode und erster Elektrode E1 als Messelektrode gemessene relative Kapazitätsänderung nimmt einen in Abhängigkeit von der Permittivität des Füllguts 2 maximalen Wert an und ändert sich infolge eines weiteren Befüllens des Behälters 1 mit demselben Füllgut 2 nicht mehr wesentlich, da eine solche Füllstandänderung außerhalb des Messbereichs der ersten Elektrode E1 liegt. Auch in einer Kondensatoranordnung bestehend aus Gegenelektrode und zweiter Elektrode E2 als Messelektrode kann bereits eine relative Kapazitätsänderung messbar sein, wenn die Permittivität des Füllguts 2 ausreichend groß ist.

Der Füllstand 2e entspricht einem Füllstand, welcher im Messbereich der zweiten Elektrode E2 liegt. In einer Kondensatoranordnung bestehend aus Gegenelektrode und zweiter Elektrode E2 als Messelektrode ist daher eine relative Kapazitätsänderung gegenüber einem vollständig leeren Behälter 1 messbar, welche bei einem Befüllen des Behälters 1 zunimmt und bei einem Entleeren des Behälters 1 abnimmt. Wird hingegen nur die erste Elektrode E1 als Messelektrode betrieben, so entspricht die beim Füllstand 2e gemessene relative Kapazitätsänderung im Wesentlichen der bei dem Füllstand 2d gemessenen relativen Kapazitätsänderung, da eine Änderung des Füllstands 2e außerhalb des Messbereichs der ersten Elektrode E1 liegt.

Der Füllstand 2f stellt einen maximalen Füllstand im Behälter 1 dar. Im vorliegenden Beispiel der Figur 1 ist der maximale Füllstand gleichzusetzen mit einem Füllstand bis zu dem oberen Ende der zweiten Elektrode E2 bzw. bis zu dem oberen Ende der Messstrecke der Füllstandsonde 3, sodass die erste und zweite Elektrode E1, E2 vollständig mit Füllgut 2 bedeckt sind. Unabhängig davon, ob nur die erste Elektrode E1 oder nur die zweite Elektrode E2 als Messelektrode betrieben wird oder ob sowohl die erste als auch die zweite Elektrode E1, E2 als zusammengeschaltete Messelektroden betrieben werden, wird bei dem Füllstand 2f stets eine relative Kapazitätsänderung gemessen, die im Wesentlichen einen Maximalwert darstellt.

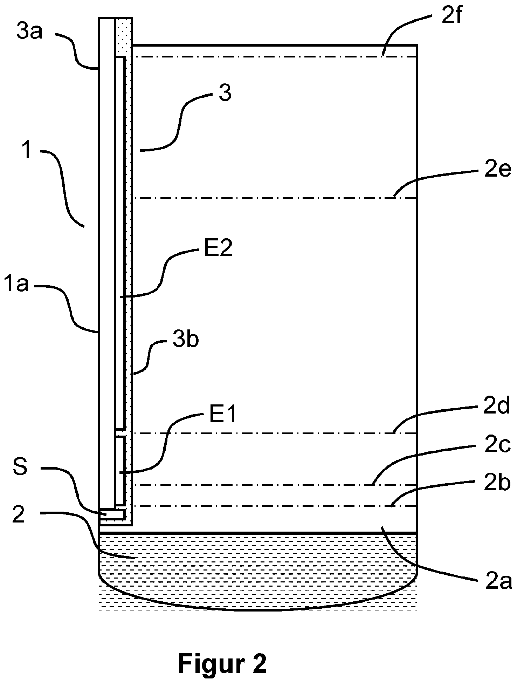

Figur 2 zeigt eine beispielhafte schematische Schnittansicht einer in einem Behälter 1 eingebrachten Füllstandsonde 3 eines erfindungsgemäßen Füllstandmessgeräts zur kapazitiven Füllstandsmessung von Füllgut 2 in Form von Flüssigkeiten und/oder Schüttgütern gemäß einer zweiten Ausführungsform. Die in Figur 2 dargestellte Ausführungsform unterscheidet sich von der in Figur 1 dargestellten Ausführungsforim lediglich dadurch, dass die Füllstandsonde 3 im Wesentlichen vertikal in der Behälterwand 1a montiert ist und eine Schirmelektrode S aufweist. Die Schirmelektrode S ist zwischen dem ersten Ende der ersten Elektrode E1, d.h. dem unteren Ende der ersten Elektrode E1, und einem Boden des Behälters 1 angeordnet. Durch die Schirmelektrode S kann das elektrische Feld der ersten Elektrode E1 zum Boden des Behälters 1 hin abgeschirmt werden. Das Merkmal einer von der Füllstandsonde 3 umfassten Schirmelektrode S ist unabhängig davon zu betrachten, wie die Füllstandsonde 3 in dem Behälter 1 montiert ist. In einer alternativen Ausführungsform kann die Füllstandsonde auch im Wesentlichen vertikal an der Behälterwand montiert sein.

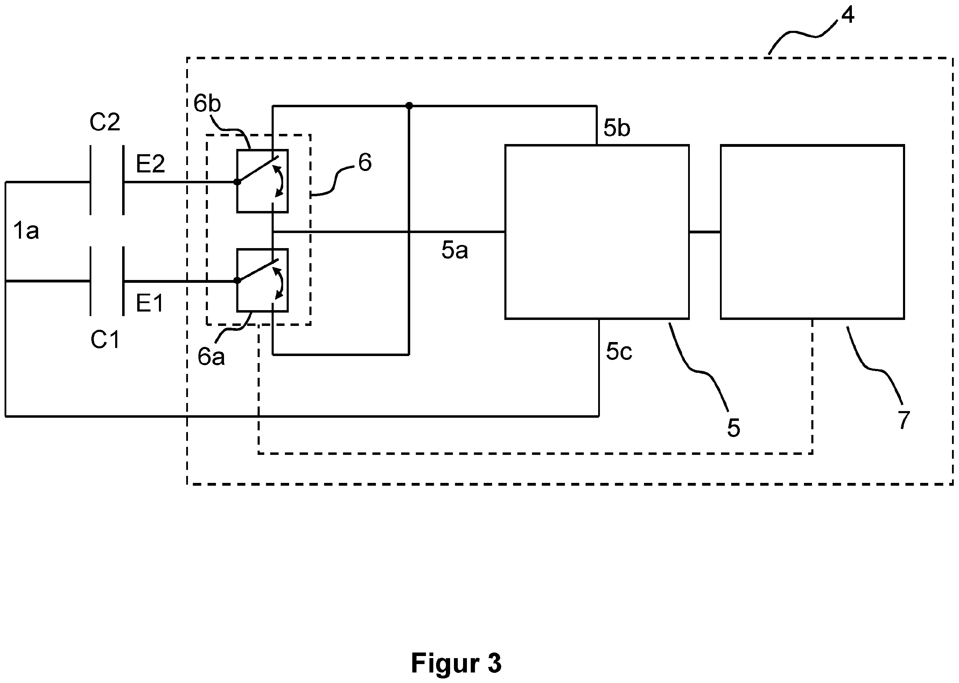

Die in Figuren 1 und 2 gezeigten Füllstandsonden sind jeweils an eine von dem erfindungsgemäßen Füllstandmessgerät umfasste Messelektronik anschließbar. Die Figuren 3, 4 und 5 zeigen jeweils eine schematische Ansicht einer Messanordnung eines erfindungsgemäßen Füllstandmessgeräts mit einer Messelektronik 4. Die Messelektronik 4 ist im vorliegenden Beispiel eine Dreielektroden-Messelektronik mit einer kapazitiven Messschaltung 5, die zum Bereitstellen eines Messpotentials 5a, eines Schirmpotentials 5b und eines Gegenelektrodenpotentials 5c eingerichtet ist. Die Messelektronik 4 umfasst zudem ein Umschaltwerk 6, welches einen ersten, mit der ersten Elektrode E1 elektrisch verbindbaren Umschalter 6a und einen zweiten, mit der zweiten Elektrode E2 elektrisch verbindbaren Umschalter 6b hat. Der erste Umschalter 6a ist dazu ausgebildet, zwischen dem an der ersten Elektrode E1 anlegbaren Messpotential 5a oder Schirmpotential 5b umzuschalten und der zweite Umschalter 6b ist dazu ausgebildet, zwischen dem an der zweiten Elektrode E2 anlegbaren Messpotential 5a oder Schirmpotential 5b umzuschalten. Das Gegenelektrodenpotential 5c ist stets an der Gegenelektrode angelegt, wobei in Figuren 1-5 die Behälterwand la beispielhaft als Gegenelektrode ausgebildet ist. Mithilfe des Umschaltwerks 6 ist das erfindungsgemäße Füllstandmessgerät in einem ersten, zweiten und dritten Messmodus betreibbar, wobei in jedem der drei Messmodi zumindest an einer Elektrode der ersten und zweiten Elektrode E1, E2 das Messpotential 5a angelegt ist.

Figuren 3, 4 und 5 unterscheiden sich voneinander durch den jeweils mittels des Umschaltwerks 6 eingestellten Messmodus. In Figur 3 ist die Messelektronik 4 zum Betreiben des Füllstandmessgeräts im ersten Messmodus eingerichtet, in welchem der erste Umschalter 6a und der zweite Umschalter 6b so eingestellt sind, dass das Messpotential 5a an der ersten Elektrode E1 und das Schirmpotential 5b an der zweiten Elektrode E2 angelegt ist. Somit ist eine Kapazität in einer Kondensatoranordnung bestehend aus der Gegenelektrode und der ersten Elektrode E1 als Messelektrode messbar, welche in der Messelektronik 4 als relative Kapazitätsänderung C1 gegenüber einem vollständig leeren Behälter 1 ermittelt wird.

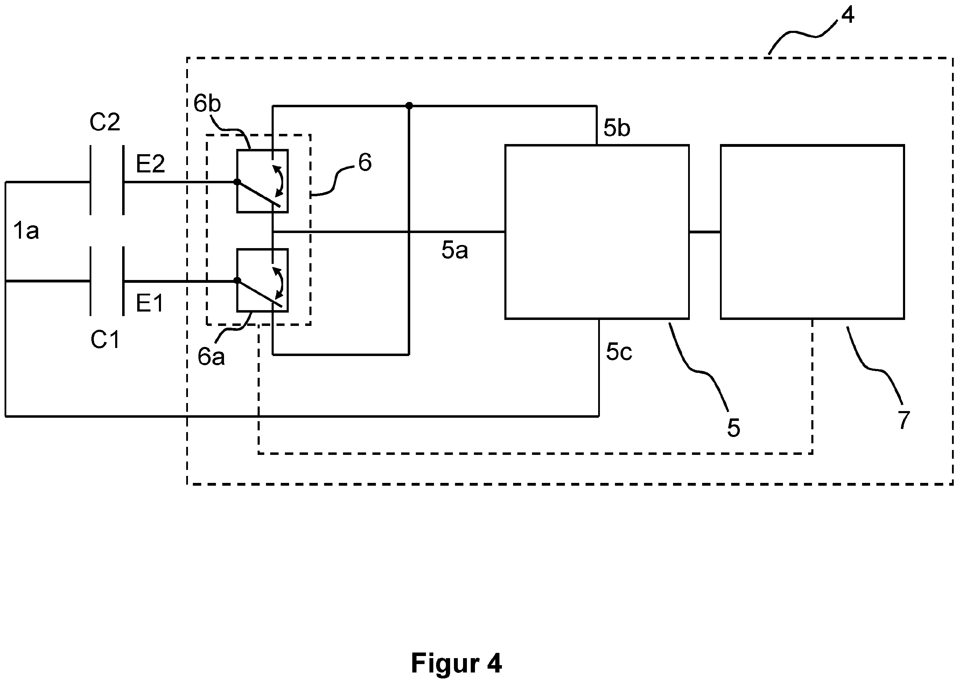

Im Gegensatz zu Figur 3 ist die Messelektronik 4 in Figur 4 zum Betreiben des Füllstandmessgeräts im zweiten Messmodus eingerichtet. Im zweiten Messmodus ist der erste Umschalter 6a so eingestellt, dass das Schirmpotential 5b an der ersten Elektrode E1 angelegt ist, während der zweite Umschalter 6b so eingestellt ist, dass das Messpotential 5a an der zweiten Elektrode E2 angelegt ist. Somit ist eine Kapazität in einer Kondensatoranordnung bestehend aus der Gegenelektrode und der zweiten Elektrode E2 als Messelektrode messbar, welche in der Messelektronik 4 wiederum als relative Kapazitätsänderung C2 gegenüber einem vollständig leeren Behälter 1 ermittelt wird.

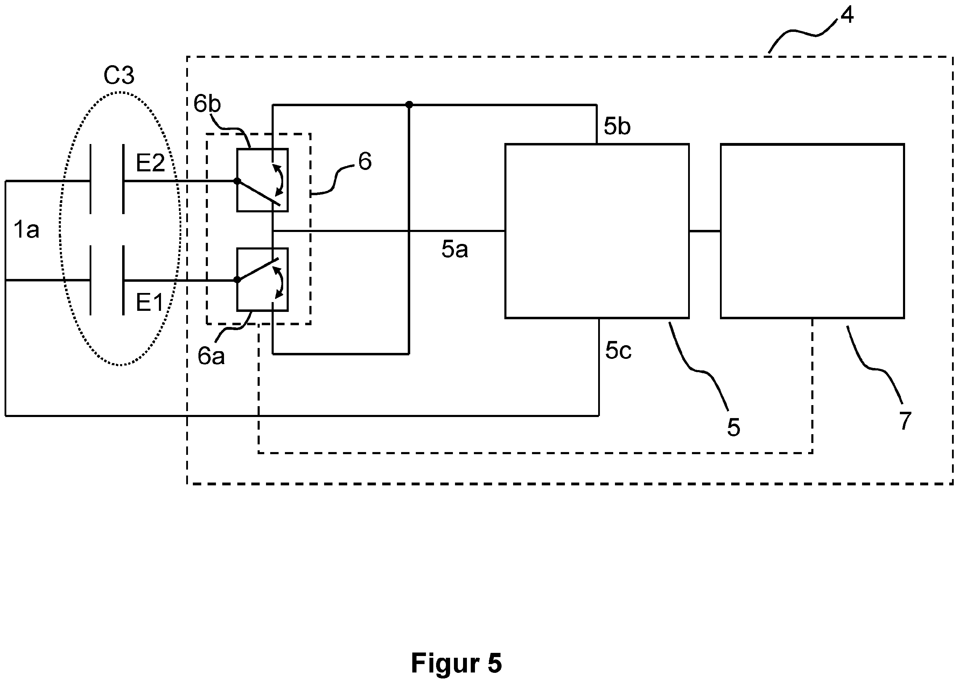

Figur 5 hingegen zeigt eine Messelektronik 4, die zum Betreiben des Füllstandmessgeräts im dritten Messmodus eingerichtet ist. Im dritten Messmodus sind der erste und zweite Umschalter 6a, 6b des Umschaltwerks 6 so eingestellt, dass das Messpotential 5a sowohl an der ersten Elektrode E1 als auch an der zweiten Elektrode E2 angelegt ist. Die erste und zweite Elektrode E1, E2 fungieren somit gemeinsam als Messelektrode und bilden zusammen mit der Gegenelektrode eine Kondensatoranordnung, mit welcher eine Kapazität messbar ist, die in der Messelektronik 4 als relative Kapazitätsänderung C3 gegenüber einem vollständig leeren Behälter 1 ermittelt wird. Dabei gilt es zu beachten, dass die beim Zusammenschalten der ersten und zweiten Elektrode E1, E2 als Messelektroden gemessene Kapazität aufgrund von Nichtlinearitäten infolge von parasitären Kapazitäten im Signalweg nicht der Summe der Kapazitäten, welche in einer Kondensatoranordnung bestehend aus Gegenelektrode und erster Elektrode E1 als Messelektrode sowie aus Gegenelektrode und zweiter Elektrode E2 als Messelektrode gemessen werden, entspricht.

Die in den Figuren 3, 4 und 5 gezeigte Messelektronik 4 umfasst zudem stets eine mit dem Umschaltwerk 6 und der Messschaltung 5 elektrisch verbundene Auswerteeinheit 7. Die Auswerteeinheit 7 ist dazu eingerichtet, das Umschaltwerk 6 zu steuern und den jeweils aktuellen Füllstand basierend auf den relativen Kapazitätsänderungen, welche in der Messelektronik 4 gegenüber einem vollständig leeren Behälter 1 in jedem der drei Messmodi gemessen werden, zu berechnen.

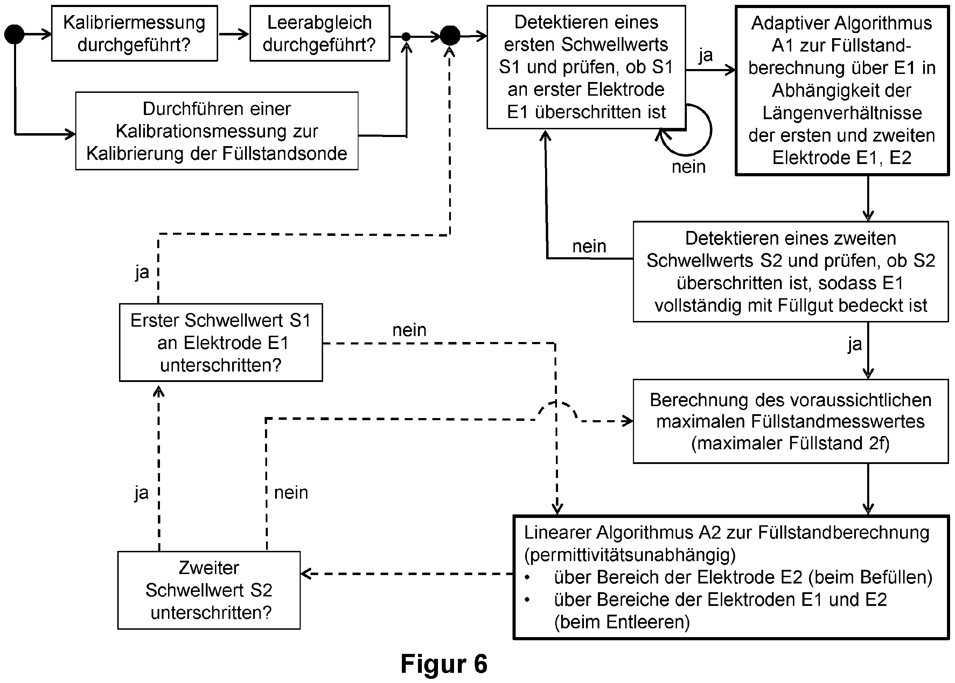

Figur 6 stellt eine schematische Ablaufskizze eines beispielhaften erfindungsgemäßen Verfahrens zur kapazitiven Füllstandsmessung von Füllgut in einem Behälter mit einer von diesem umfassten Gegenelektrode dar und gibt einen grundsätzlichen Überblick über einen möglichen Verfahrensablauf, bei welchem der Behälter zunächst mit Füllgut befüllt wird (durchgezogene Linie) und anschließend entleert werden kann (gestrichelte Linie). So ist in Figur 6 nicht dargestellt, dass das Verfahren erst nach Einbringen einer Füllstandsonde mit einer ersten Elektrode E1 und einer zweiten Elektrode E2 zur Füllstandsmessung in den Behälter ausgeführt wird. Wie beispielsweise in Figur 1 und 2 zu sehen, sind die erste und die zweite Elektrode E1, E2 im eingebrachten Zustand der Füllstandsonde so angeordnet, dass bei einem Befüllen des Behälters zunächst die erste Elektrode E1 mit Füllgut bedeckt wird, bevor die zweite Elektrode E2 zumindest teilweise mit Füllgut bedeckt wird, und erstrecken sich ihrer Länge nach nacheinander und voneinander beabstandet in den Behälter hinein und im Wesentlichen parallel zu der Gegenelektrode. Wie bereits bzgl. der Figuren 1 und 2 beschrieben, ist durch den gesamten, zwischen dem ersten, von der zweiten Elektrode E2 entfernten Ende der ersten Elektrode E1 und dem zweiten, von der ersten Elektrode E1 entfernten Ende der zweiten Elektrode E2 gebildeten Bereich eine Messstrecke definiert. Nachdem ein Messpotential, Schirmpotential und Gegenelektrodenpotential bereitgestellt wurde, die erste und zweite Elektrode sowie die Gegenelektrode an die Messelektronik angeschlossen wurden, wie in Figuren 3, 4, 5 beispielhaft gezeigt, und das Gegenelektrodenpotential an die Gegenelektrode angelegt wurde, kann das Verfahren zur kapazitiven Füllstandsmessung mit einer kalibrierten Füllstandsonde ausgeführt werden.

Ein der Übersichtlichkeit halber nicht in Figur 6 dargestellter Verfahrensschritt ist das Betreiben der ersten und zweiten Elektrode E1, E2 in einem ersten, zweiten oder dritten Messmodus durch Umschalten zwischen einem an die erste und zweite Elektrode E1, E2 der Füllstandsonde jeweils anzulegenden Messpotential oder Schirmpotential. Im ersten Messmodus wird das Messpotential an der ersten Elektrode E1 und das Schirmpotential an der zweiten Elektrode E2 angelegt, wie in Figur 3 gezeigt, während im zweiten Messmodus das Schirmpotential an die erste Elektrode E1 und das Messpotential an die zweite Elektrode E2 angelegt wird, wie in Figur 4 gezeigt. Im dritten Messmodus wird das Messpotential an die erste und an die zweite Elektrode E1, E2 angelegt, wie in Figur 5 dargestellt. Daran schließt sich der Schritt des Durchführens wenigstens einer Füllstandsmessung an, wobei relative Kapazitätsänderungen gegenüber einem vollständig leeren Behälter bei einem Befüllen des Behälters und/oder bei einem Entleeren des Behälters in jedem der drei Messmodi gemessen und zur Berechnung des Füllstands herangezogen werden. Das Durchführen einer Füllstandsmessung erfolgt vorzugsweise kontinuierlich, wie es im Beispiel der Figur 6 der Fall ist. Insbesondere werden der erste, zweite und dritte Messmodus während des Durchführens der Füllstandsmessung jeweils zyklisch durchlaufen, und zwar unabhängig von dem jeweils aktuellen Füllstand. Dadurch wird ein schneller Abgleich der in den drei Messmodi jeweils gemessenen relativen Kapazitätsänderungen ermöglicht, sodass eine verlässlichere bzw. genauere Berechnung des jeweils aktuellen Füllstands erfolgen kann, als dies ohne zyklisches Durchlaufen der Fall wäre.

Während der Durchführung der Füllstandsmessung werden vorzugsweise zwei verschiedene Algorithmen A1, A2 ausgeführt, wobei zum Berechnen eines jeweils aktuellen Füllstands in Abhängigkeit von den hierzu gemessenen relativen Kapazitätsänderungen der jeweils auszuführende Algorithmus A1, A2 ausgewählt wird. Erläuterungen zu den zwei in Figur 6 genannten Algorithmen A1, A2 folgen.

Wie in Figur 6 dargestellt, kann vor dem Durchführen einer Füllstandsmessung zunächst optional geprüft werden, ob eine Kalibriermessung bzw. Kalibrationsmessung zur Kalibrierung der Füllstandsonde durchgeführt wurde. Daran anschließend kann optional geprüft werden, ob zudem ein Leerabgleich durchgeführt wurde. Ein Leerabgleich bedeutet eine Kapazitätsmessung bei einem vollständig leeren Behälter, d.h. bei einem Behälter ohne darin befindliches Füllgut.

Vor Beginn des Durchführens einer Füllstandsmessung ist stets erforderlich, dass die Füllstandsonde, wie oben aufgeführt, kalibriert ist. Dies kann beispielsweise durch das erfindungsgemäße Verfahren zur Kalibrierung der Füllstandsonde erfolgen, wie in Figur 6 als Alternative zur Überprüfung der Durchführung einer Kalibriermessung und/oder eines Leerabgleichs dargestellt. Das Verfahren zur Kalibrierung der Füllstandsonde erfolgt in einem Behälter mit einer von diesem umfassten Gegenelektrode. Eine Füllstandsonde mit einer ersten Elektrode E1 und einer zweiten Elektrode E2 wird zur Kalibrierung in den Behälter eingebracht, sodass bei einem Befüllen des Behälters zuerst die erste Elektrode E1 mit Füllgut bedeckt wird, bevor die zweite Elektrode E2 zumindest teilweise mit Füllgut bedeckt wird, und die erste und die zweite Elektrode E1, E2 sich ihrer Länge nach nacheinander und voneinander beabstandet in den Behälter hinein und im Wesentlichen parallel zu der Gegenelektrode erstrecken, wie z.B. in Figuren 1 oder 2 dargestellt. Somit wird durch den gesamten, zwischen einem ersten, von der zweiten Elektrode E2 entfernten Ende der ersten Elektrode E1 und einem zweiten, von der ersten Elektrode E1 entfernten Ende der zweiten Elektrode E2 gebildeten Bereich eine Messstrecke definiert. Nach dem Einbringen der Füllstandsonde in den Behälter erfolgt ein Bereitstellen eines Messpotentials, Schirmpotentials und Gegenelektrodenpotentials, gefolgt von einem Anschließen der ersten und zweiten Elektrode E1, E2 sowie der Gegenelektrode an eine Messelektronik. Das Gegenelektrodenpotential wird an die Gegenelektrode angelegt. Die erste und die zweite Elektrode E1, E2 werden in dem hinsichtlich des Verfahrens zur kapazitiven Füllstandsmessung bereits definierten ersten, zweiten oder dritten Messmodus betrieben, indem zwischen einem an die erste und zweite Elektrode E1, E2 jeweils anzulegenden Messpotential oder Schirmpotential umgeschaltet wird (siehe Figuren 3, 4, 5). Letztlich erfolgt ein Durchführen einer Kalibrationsmessung zur Kalibrierung der Füllstandsonde, wobei relative Kapazitätsänderungen zwischen einem vollständig leeren Behälter und einem maximalen Füllstand im zumindest ersten und dritten Messmodus ermittelt werden. Dabei werden zumindest der erste und der dritte Messmodus vorzugsweise jeweils zyklisch durchlaufen. Die relativen Kapazitätsänderungen können auch in jedem der drei Messmodi ermittelt werden, um eine genauere Kalibrierung der Füllstandsonde durch zusätzliche Messdaten zu ermöglichen.

Das Kalibrierverfahren wird insbesondere unter der Annahme durchgeführt, dass die zugrundeliegende Messanordnung im Wesentlichen einem Zylinderkondensator entspricht. Eine erste Kapazitätsmessung erfolgt im Leerabgleich und eine zweite Kapazitätsmessung erfolgt bei einem vorbestimmten maximalen Füllstand des Behälters, d.h. im Vollabgleich, indem relative Kapazitätsänderungen gegenüber den beim Leerabgleich ermittelten Kapazitäten erfasst werden. Ein vorbestimmter maximaler Füllstand liegt insbesondere dann vor, wenn ein im Behälter befindliches Füllgut eine Füllhöhe bis zu dem zweiten, von der ersten Elektrode entfernten Ende der zweiten Elektrode und somit bis zu dem oberen Ende der Messstrecke der Füllstandsonde hat, sodass die erste Elektrode und die zweite Elektrode vollständig mit diesem Füllgut bedeckt sind.

Das Verfahren zur Kalibrierung der Füllstandsonde kann auch ohne ein Befüllen des Behälters mit Füllgut erfolgen, beispielsweise mit einer einer Füllstandsmessung nachempfundenen Kalibiervorrichtung. Ein Befüllen des Behälters mit Füllgut kann beispielsweise simuliert werden, indem die Gegenelektrode verfahrbar ausgestaltet ist und infolgedessen zwei verschiedene Positionen entsprechend einem vollständig leeren Behälter und einem vorbestimmten maximalen Füllstand des Behälters einnimmt. In diesem Fall entspricht der vorbestimmte maximale Füllstand einem simulierten Füllstand bis zu dem zweiten, von der ersten Elektrode entfernten Ende der zweiten Elektrode.

Ferner kann im Rahmen des Verfahrens zur Kalibrierung der Füllstandsonde ein Kalibrationswert anhand der ermittelten relativen Kapazitätsänderungen berechnet werden. Der Kalibrationswert ist vorzugsweise im Wesentlichen proportional zu einem Verhältnis der ersten Länge der ersten Elektrode E1 und der zweiten Länge der zweiten Elektrode E2 zueinander, welches auch ein Verhältnis zwischen der ersten oder der zweiten Länge und einer Summe aus erster und zweiter Länge sowie ein dazu inverses Verhältnis sein kann. Die Kalibrierung der Füllstandsonde dient somit vor allem dem Zweck, Informationen über die Längenverhältnisse zwischen erster Elektrode und zweiter Elektrode zu erhalten. Im Gegensatz zu Dokumenten des Standes der Technik ist eine Ermittlung einer relativen Permittivität des Füllguts im Rahmen der Kalibrierung der Füllstandsonde nicht erforderlich.

Wie in Figur 6 ersichtlich, sind die optionalen Schritte zur Überprüfung einer Kalibriermessung und eines Leerabgleichs nicht nötig, wenn die Füllstandsonde vor der Durchführung einer ersten Füllstandsmessung gemäß dem zuvor beschriebenen Verfahren kalibriert wurde, da im Rahmen der Kalibrationsmessung ein Leerabgleich im zumindest ersten und dritten Messmodus durchgeführt wird. Jedoch kann diese Überprüfung bei einer kalibrierten Füllstandsonde, die nicht im Rahmen des zuvor beschriebenen Kalibrierverfahrens kalibriert wurde, durchaus hilfreich sein, um Messfehler zu vermeiden und, falls erforderlich, um einen entsprechenden Leerabgleich durchzuführen.

Gemäß des in Figur 6 skizzierten Verfahrensablaufs wird vorzugsweise ein erster Schwellwert S1 des Füllstands basierend auf im ersten Messmodus gemessenen relativen Kapazitätsänderungen detektiert. Dieser erste Schwellwert S1 entspricht im Wesentlichem einem Füllstand bis zu dem ersten, von der zweiten Elektrode E2 entfernten Ende der ersten Elektrode E1, d.h. bis zu dem unteren Ende der ersten Elektrode E1 und somit dem unteren Ende der Messstrecke der Füllstandsonde. Der erste Schwellwert S1 ist nicht notwendigerweise als konkreter Wert zu verstehen, sondern vielmehr als begrenzter Wertebereich um das untere Ende der Messstrecke herum, und wird daher auch als erste Füllgutschwelle bezeichnet. Mithilfe des erfindungsgemäßen Verfahrens können Füllstände bei einem Befüllen des Behälters zumindest ab einem Überschreiten des ersten Schwellwerts S 1 und bei einem Entleeren des Behälters zumindest bis zum Unterschreiten des ersten Schwellwerts S1 ermittelt werden. Gemäß Figur 6 ist daher vorgesehen zu überprüfen, ob der erste Schwellwert bzw. die erste Füllgutschwelle S 1 überschritten ist. Dies lässt sich anhand von zumindest im ersten, aber auch im dritten Messmodus gemessenen relativen Kapazitätsänderungen gegenüber dem Leerabgleich feststellen, deren Werte neben dem Füllstand auch von der Permittivität des Füllguts abhängen. So wird beispielsweise die Erfassung von relativen Kapazitätsänderungen bei einem Füllgut mit einer Permittivität, die nur wenig von der Permittivität von Luft, εᵣ = 1,00059, abweicht, ungenauer und daher fehlerbehafteter als bei einem Füllgut mit einer deutlich von der Permittivität von Luft abweichenden Permittivität.

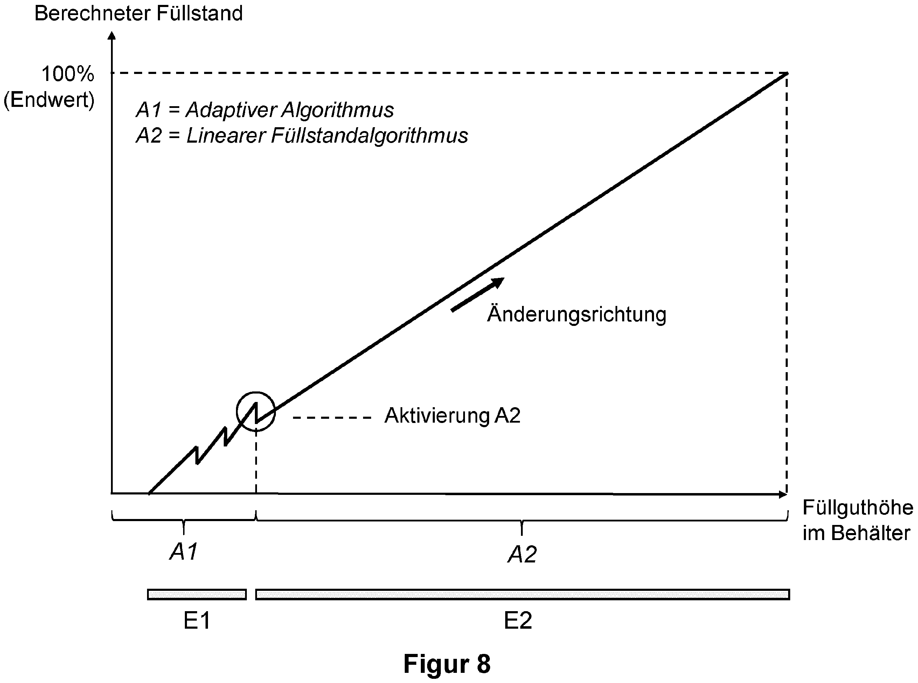

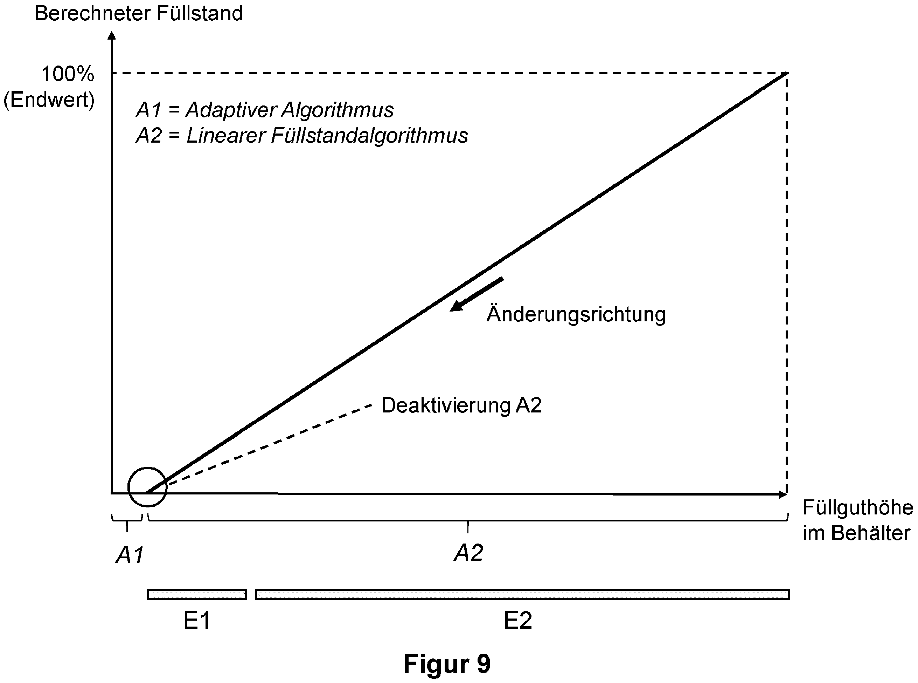

Wie aus Figur 6 erkennbar, wird zum Berechnen des Füllstands bei einem zunehmenden Füllstand, üblicherweise bei einem Befüllen des Behälters, vorzugsweise ein erster Algorithmus A1 ausgeführt, und zwar zumindest sobald der erste Schwellwert S1 überschritten ist. Der erste Algorithmus A1 wertet ein Verhältnis der jeweils im ersten Messmodus gemessenen relativen Kapazitätsänderung und der jeweils im zweiten Messmodus gemessenen relativen Kapazitätsänderung aus, und zwar unter Berücksichtigung des aus der Kalibrierung der Füllstandsonde resultierenden Längenverhältnisses zwischen erster und zweiter Elektrode E1, E2. Der erste Algorithmus A1 ist gemäß Figur 6 ein adaptiver Algorithmus, da er die Berechnung des Füllstands schrittweise anpasst und, falls erforderlich, verbessert. Bei welchen Füllguthöhen im Behälter der adaptive Algorithmus grundsätzlich bei der Berechnung des Füllstands ausgeführt werden kann, geht je nachdem, ob ein Befüllen oder Entleeren des Behälters stattfindet, aus den Figuren 8 (Befüllen) bzw. 9 (Entleeren) hervor. So kann der als erster Algorithmus A1 ausgebildete adaptive Algorithmus gemäß Figuren 8 und 9 auch unterhalb des ersten Schwellwerts S1 ausgeführt werden. In diesem Fall gibt der adaptive Algorithmus beim Befüllen erst kurz vor Erreichen des ersten Schwellwerts S1 einen von null verschiedenen berechneten Füllstand aus, während er beim Entleeren des Behälters kontinuierlich einen berechneten Füllstand ausgibt, welcher sich allmählich der null nähert.

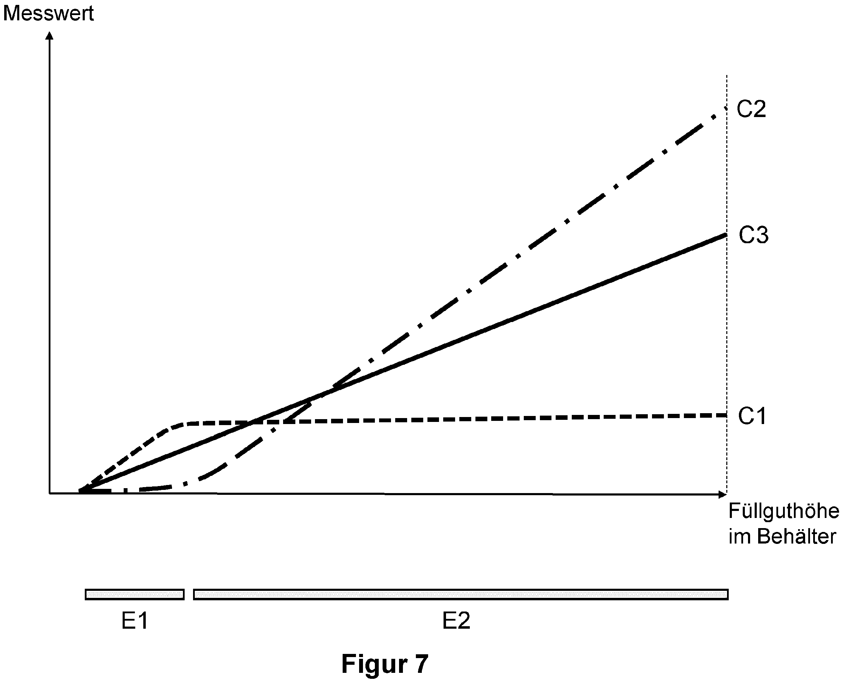

Weiterhin umfasst das Verfahren zur kapazitiven Füllstandsmessung gemäß der beispielhaften Ablaufskizze in Figur 6 den Schritt des Detektierens eines zweiten Schwellwerts S2 des Füllstands und insbesondere den Schritt des Überprüfens, ob der zweite Schwellwert S2 überschritten ist, und zwar basierend auf im zumindest ersten und zweiten Messmodus gemessenen relativen Kapazitätsänderungen. Der zweite Schwellwert S2 entspricht im Wesentlichen einem Füllstand entsprechend dem Füllstand 2d in Figuren 1 und 2 und liegt in einem Bereich, in welchem die erste und die zweite Elektrode E1, E2 voneinander beabstandet sind, sodass die erste Elektrode E1 vollständig mit Füllgut bedeckt und die zweite Elektrode E2 nicht mit Füllgut bedeckt ist. Der zweite Schwellwert S2, auch als zweite Füllgutschwelle S2 bezeichnet, muss nicht notwendigerweise auf einen konkreten Wert beschränkt sein, sondern kann demnach einen begrenzten Wertebereich umfassen, nämlich den Bereich, in dem die erste und zweite Elektrode E1, E2 voneinander beabstandet sind. Da der Abstand zwischen der ersten und der zweiten Elektrode E1, E2 jedoch möglichst gering ist, vorzugsweise kleiner als die Hälfte der jeweiligen Elektrodenbreite bzw. des jeweiligen Elektrodendurchmessers, kann der zweite Schwellwert S2 relativ präzise detektiert werden. So lässt sich der zweite Schwellwert S2 beim Befüllen des Behälters u.a. dadurch detektieren, dass sich ab dessen Überschreitung einerseits die im ersten Messmodus gemessene relative Kapazitätsänderung nicht mehr wesentlich ändert, da eine Füllstandänderung im Messbereich der zweiten Elektrode E2 außerhalb des durch den ersten Messmodus abgedeckten Messbereichs der ersten Elektrode E1 liegt, und andererseits die im zweiten Messmodus gemessene relative Kapazitätsänderung erkennbar ändert, und zwar sich je nach Permittivität des Füllguts erhöht (siehe Figur 7). Beim Entleeren des Behälters lässt sich der zweite Schwellwert S2 dadurch bestimmen, dass sich ab dessen Unterschreitung einerseits die im ersten Messmodus gemessene relative Kapazitätsänderung erkennbar ändert, insbesondere sich von einem zuvor angenommenen Maximalwert aus in Abhängigkeit der Permittivität des Füllguts verringert, und andererseits die im zweiten Messmodus gemessene relative Kapazitätsänderung nicht mehr wesentlich ändert, sodass im Wesentlichen keine Kapazitätsänderung mehr gegenüber einem beim Leerabgleich erfassten Kapazitätswert messbar ist (siehe Figur 7), da ein den zweiten Schwellwert S2 unterschrittener Füllstand außerhalb des durch den zweiten Messmodus abgedeckten Messbereichs liegt. Auf gleiche Weise kann überprüft werden, ob der zweite Schwellwert S2 überschritten bzw. nicht unterschritten ist.

Wird bei der Überprüfung festgestellt, dass der zweite Schwellwert S2 nicht überschritten ist, so erfolgt gemäß Figur 6 eine erneute Überprüfung dahingehend, ob der erste Schwellwert S1 von dem jeweils aktuellen Füllstand überschritten ist. Wird dies bejaht, was bei einem Befüllen des Behälters stets der Fall sein sollte, so wird der zuvor beschriebene adaptive Algorithmus zur Berechnung des jeweils aktuellen Füllstands ausgeführt, wie in Figur 8 beispielhaft skizziert.

Wird bei der Überprüfung hingegen festgestellt, dass der aktuelle Füllstand den zweiten Schwellwert S2 überschritten hat, erfolgt gemäß Figur 6 vorzugsweise eine Berechnung des voraussichtlichen maximalen Füllstands im Behälter, welcher im Wesentlichen dem in Figuren 1 und 2 skizzierten Füllstand 2f entspricht. Um den voraussichtlichen maximalen Füllstand zu berechnen, erfolgt zunächst bei einem Füllstand zwischen dem zweiten Schwellwert S2 und dem maximalen Füllstand insbesondere ein Berechnen einer maximalen relativen Kapazitätsänderung unter Annahme eines maximalen Füllstandes, d.h. einer maximalen relativen Kapazitätsänderung, welche der relativen Kapazitätsänderung bei dem maximalen Füllstand entspricht. Das Berechnen der maximalen relativen Kapazitätsänderung erfolgt vorzugsweise kontinuierlich und wird basierend auf im ersten Messmodus jeweils gemessenen relativen Kapazitätsänderungen sowie auf einem Kalibrationswert der Füllstandsonde, insbesondere einem berechneten Kalibrationswert im Rahmen des Verfahrens zur Kalibrierung der Füllstandsonde, durchgeführt. Wie bereits zuvor erläutert und in Figur 7 zu sehen, nimmt die jeweils im ersten Messmodus gemessene Kapazitätsänderung ab einem Überschreiten des zweiten Schwellwertes einen Maximalwert in Abhängigkeit von der Permittivität des Füllguts an, da ein Füllstand in diesem Bereich außerhalb des Messbereichs der ersten Elektrode E1 liegt und die erste Elektrode E1 dann vollständig mit Füllgut bedeckt ist. Ausgehend von dem im ersten Messmodus jeweils erfassten Maximalwert kann eine bei dem maximalen Füllstand voraussichtlich vorliegende maximale relative Kapazitätsänderung insbesondere durch Multiplikation mit dem aus dem Kalibrationswert erhaltenen Längenverhältnis der ersten und zweiten Elektrode E1, E2 zueinander berechnet werden. Die Permittivität des Füllguts als solche wird zur Berechnung der maximalen relativen Kapazitätsänderung nicht benötigt, da sie bereits implizit durch den im ersten Messmodus jeweils erfassten Maximalwert mitberücksichtigt ist. Folglich entfällt ein gesondertes Ermitteln einer relativen Permittivität des Füllguts mittels einer zusätzlichen Referenzelektrode. Die Berechnung der voraussichtlich maximalen relativen Kapazitätsänderung erfolgt linear unter der Annahme, dass die Gegenelektrode über die gesamte Messstrecke im Wesentlichen parallel und äquidistant zu der ersten und zweiten Elektrode E!, E2 verläuft. Unterschreitet der aktuelle Füllstand den zweiten Schwellwert S2, wird die zuvor berechnete maximale relative Kapazitätsänderung festgehalten. Bei erneutem Überschreiten des zweiten Schwellwerts S2 wird die kontinuierliche Berechnung der maximalen relativen Kapazitätsänderung fortgesetzt.

Ferner kann der jeweilige Füllstand basierend auf im dritten Messmodus gemessenen relativen Kapazitätsänderungen bei einem Füllstand zwischen dem zweiten Schwellwert S2 und dem maximalen Füllstand, welcher einer berechneten oder einer infolge des Durchführens der Kalibrationsmessung ermittelten maximalen relativen Kapazitätsänderung entspricht, berechnet werden. Zur Berechnung des jeweiligen aktuellen Füllstands wird insbesondere ein Verhältnis zwischen der im dritten Messmodus jeweils gemessenen relativen Kapazitätsänderung und der berechneten oder im Rahmen der Kalibrationsmessung erfassten maximalen relativen Kapazitätsänderung herangezogen. Falls die Messanordnung und das Füllgut bei Durchführung der Füllstandsmessung gegenüber der Messanordnung und dem Füllgut im Rahmen der Kalibrationsmessung identisch sind, kann die im Rahmen der Kalibrationsmessung bei maximalem Füllstand im dritten Messmodus erfasste relative Kapazitätsänderung als maximale relative Kapazitätsänderung verwendet werden. Falls sich die bei der Füllstandsmessung verwendete Messanordnung und/oder die Permittivität des Füllguts gegenüber der Kalibrationsmessung unterscheiden, muss die maximale relative Kapazitätsänderung jedoch berechnet und zur Füllstandberechnung herangezogen werden. Unter einer Messanordnung wird beispielsweise die Behältergeometrie, die Einbauposition der Füllstandsonde in Bezug zu Behälter und Gegenelektrode und/oder die Einbauposition der Gegenelektrode im Behälter verstanden.

Ein Beispiel für eine solche Füllstandberechnung ist in Figur 6 genannt. Gemäß dem in Figur 6 skizzierten Verfahrensablauf wird ein linearer Algorithmus als zweiter Algorithmus A2 zum Berechnen des jeweils aktuellen Füllstands ausgeführt, und zwar bei zunehmenden Füllstand bei einem Überschreiten des zweiten Schwellwerts S2 (siehe Figur 8) und bei abnehmenden Füllstand bis zu einem Unterschreiten des ersten Schwellwerts S1 (siehe Figur 9). Der lineare Algorithmus wertet ein Verhältnis zwischen der zumindest im dritten Messmodus jeweils gemessenen relativen Kapazitätsänderung und einer maximalen relativen Kapazitätsänderung unter Annahme des maximalen Füllstandes aus. Die maximale relative Kapazitätsänderung wird entweder berechnet oder wurde vorab infolge des Durchführens der Kalibrationsmessung ermittelt. Basierend auf dem ausgewerteten Verhältnis bestimmt der lineare Algorithmus unabhängig von der Permittivität des Füllguts den aktuellen Füllstand. Die Bezeichnung des linearen Algorithmus liegt darin begründet, dass der lineare Algorithmus zur aktuellen Füllstandberechnung von einer Linearität zwischen dem zu berechnenden aktuellen Füllstand und der zumindest im dritten Messmodus gemessenen relativen Kapazitätsänderung ausgeht. Da der lineare Algorithmus mehr Messdaten, beispielsweise die als Maximalwert vorliegende im ersten Messmodus jeweils gemessene Kapazitätsänderung, zur Verfügung hat als der adaptive Algorithmus, kann der lineare Algorithmus den jeweils aktuellen Füllstand genauer berechnen als der adaptive Algorithmus.

Wird während der Ausführung des linearen Algorithmus insbesondere bei einem Entleeren des Behälters erkannt, dass der aktuelle Füllstand den zweiten Schwellwert S2 unterschritten hat, wird zunächst gemäß Figur 6 geprüft, ob der aktuelle Füllstand auch den ersten Schwellwert S1 bereits unterschritten hat. Wird dies verneint, so wird der lineare Algorithmus entsprechend Figur 9 weiterhin ausgeführt. Wird dies jedoch bejaht, wird die Ausführung des linearen Algorithmus beendet bzw. der lineare Algorithmus wird gemäß Figur 9 deaktiviert. Beispielsweise kann dann der adaptive Algorithmus zur Berechnung eines Füllstands ausgeführt werden, bis der Behälter vollständig leer ist, wie in Figur 9 skizziert. Zudem erfolgt in regelmäßigen zeitlichen Abständen eine erneute Überprüfung, ob der aktuelle Füllstand den ersten Schwellwert S1 überschritten hat.

Im Rahmen des erfindungsgemäßen Verfahrens zur kapazitiven Füllstandsmessung kann auch vorgesehen sein, neben dem ersten und zweiten Schwellwert S1, S2 weitere Schwellwerte zu detektieren, welche sich jeweils unterhalb oder oberhalb des ersten und/oder zweiten Schwellwerts S1, S2 befinden können und vorzugsweise auf kontinuierlich berechneten Verhältnissen basieren, welche aus den im ersten und zweiten Messmodus gemessenen relativen Kapazitätsänderungen bestehen. Mit Hilfe dieser weiteren Schwellwerte können auftretende Hysteresen bei der Erfassung der relativen Kapazitätsänderungen berücksichtigt werden, wodurch die Genauigkeit der Füllstandberechnung verbessert werden kann.

Figur 7 zeigt eine schematische Ansicht der gemessenen relativen Kapazitätsänderungen im ersten, zweiten und dritten Messmodus in Abhängigkeit von der Füllguthöhe im Behälter bzw. dem Füllstand. Wird die Füllstandsonde im ersten Messmodus betrieben, können zwischen der Gegenelektrode und der ersten Elektrode E1 als Messelektrode gemessene relative Kapazitätsänderungen C1 in Abhängigkeit von der Permittivität des Füllguts bereits kurz vor dem Erreichen des unteren Endes der ersten Elektrode E1 erfasst werden. Mit zunehmender Füllguthöhe im Behälter steigt der Wert der im ersten Messmodus gemessenen relativen Kapazitätsänderungen C1 unter der Annahme einer sich nicht wesentlich verändernden Permittivität des Füllguts im Wesentlichen linear an. Dieser lineare Anstieg endet etwa bei einem Füllstand entsprechend dem Füllstand 2d in Figuren 1 und 2, d.h. im Bereich des zweiten Schwellwerts, wobei der Wert der im ersten Messmodus gemessenen relativen Kapazitätsänderungen C1 ein Maximum erreicht. Bei weiterem Anstieg der Füllguthöhe im Behälter bildet sich ein Plateau auf diesem Maximum aus, welches sich bis zu dem maximalen Füllstand erstreckt.

Wird die Füllstandsonde im zweiten Messmodus betrieben, können zwischen der Gegenelektrode und der zweiten Elektrode E2 als Messelektrode gemessene relative Kapazitätsänderungen C2 je nach Permittivität des Füllguts bereits vor dem Erreichen des unteren Endes der zweiten Elektrode E2, erfasst werden. So ist in Figur 7 skizzenhaft dargestellt, dass relative Kapazitätsänderungen C2 je nach Permittivität des Füllguts bereits bei einem Füllstand, der im Messbereich der ersten Elektrode E1 liegt, messbar sein können. Die im zweiten Messmodus gemessenen relativen Kapazitätsänderungen C2 steigen in Abhängigkeit der Füllguthöhe im Behälter und der Permittivität des Füllguts im Wesentlichen linear an, bis die Füllhöhe des Füllguts den maximalen Füllstand erreicht.

Erfolgt ein Betreiben der Füllstandsonde im dritten Messmodus, so können zwischen der Gegenelektrode und der zusammengeschalteten ersten und zweiten Elektrode E1, E2 als Messelektroden gemessene relative Kapazitätsänderungen C3 je nach Permittivität des Füllguts bereits kurz vor dem Erreichen des unteren Endes der ersten Elektrode E1 erfasst werden, wie auch im ersten Messmodus der Fall ist. Da sich der Messbereich im dritten Messmodus entlang der gesamten Messstrecke der Füllstandsonde erstreckt, steigen die relativen Kapazitätsänderungen C3 in Abhängigkeit von der Füllstandhöhe im Behälter und der Permittivität des Füllguts im Wesentlichen linear über die gesamte Messstrecke an, bis die Füllguthöhe im Behälter den maximalen Füllstand erreicht.

Es wird darauf hingewiesen, dass sämtliche Merkmale, die sich einem Fachmann aus der vorliegenden Beschreibung, den Figuren ergeben, auch wenn diese Merkmale nur im Zusammenhang mit bestimmten weiteren Merkmalen beschrieben wurden, sowohl einzeln als auch in beliebigen Zusammensetzungen mit anderen der in der vorliegenden Erfindung offenbarten Merkmale oder Merkmalsgruppen kombinierbar sind, soweit dies nicht explizit ausgeschlossen wurde oder technische Gegebenheiten derartige Kombinationen unmöglich oder sinnlos machen. Zugunsten der Kürze und der Lesbarkeit der Beschreibung wurde eine umfassende, ausdrückliche Beschreibung sämtlicher möglicher Kombinationen von Merkmalen vermieden. Der durch die Patentansprüche definierte Schutzbereich der vorliegenden Erfindung wird nicht durch die in der Beschreibung und den Zeichnungen im Detail dargestellten und lediglich als Beispiel dienenden Ausführungsformen der Erfindung beschränkt. Abwandlungen der offenbarten Ausführungsformen sind für den Fachmann aus den Zeichnungen, der Beschreibung und den beigefügten Ansprüchen offensichtlich. Das in den Patentansprüchen aufgeführte Wort "aufweisen" schließt andere Elemente oder Schritte nicht aus. Der unbestimmte Artikel "eine" oder "ein" schließt eine Mehrzahl nicht aus. Die Kombination von Merkmalen, die in verschiedenen Patentansprüchen beansprucht sind, ist nicht ausgeschlossen.

## Patentansprüche

1. Füllstandmessgerät zur kapazitiven Füllstandsmessung von Füllgut (2) in Form von Flüssigkeiten und/oder Schüttgütern in einem Behälter (1) mit einer von dem Behälter (1) umfassten Gegenelektrode (1a),
umfassend eine Messelektronik (4) und eine an die Messelektronik (4) anschließbare Füllstandsonde (3),
- wobei an der Füllstandsonde (3) eine erste Elektrode (E1) und eine zweite Elektrode (E2) ausgebildet sind, welche zur Füllstandsmessung in den Behälter (1) einzubringen sind und sich im eingebrachten Zustand ihrer Länge nach nacheinander und voneinander beabstandet in den Behälter (1) hinein und im Wesentlichen parallel zu der Gegenelektrode (1a) erstrecken, sodass
bei einem Befüllen des Behälters (1) zuerst die erste Elektrode (E1) mit Füllgut (2) bedeckt ist, bevor die zweite Elektrode (E2) zumindest teilweise mit Füllgut (2) bedeckt ist, und
durch den gesamten, zwischen einem ersten, von der zweiten Elektrode (E2) entfernten Ende der ersten Elektrode (E1) und einem zweiten, von der ersten Elektrode (E1) entfernten Ende der zweiten Elektrode (E2) gebildeten Bereich eine Messstrecke definiert ist,
- wobei die Messelektronik (4) zum Bereitstellen eines Messpotentials (5a), eines Schirmpotentials (5b) und eines Gegenelektrodenpotentials (5c) eingerichtet ist und ein Umschaltwerk (6) mit einem ersten, mit der ersten Elektrode (E1) elektrisch verbindbaren Umschalter (6a) und einem zweiten, mit der zweiten Elektrode (E2) elektrisch verbindbaren Umschalter (6b) umfasst,
- wobei zum Betreiben des Füllstandmessgerätes ein erster, zweiter oder dritter Messmodus durch das Umschaltwerk (6) einstellbar ist, indem der erste Umschalter (6a) zum Umschalten zwischen dem an der ersten Elektrode (E1) anlegbaren Messpotential (5a) oder Schirmpotential (5b) ausgebildet ist und der zweite Umschalter (6b) zum Umschalten zwischen dem an der zweiten Elektrode (E2) anlegbaren Messpotential (5a) oder Schirmpotential (5b) ausgebildet ist, und wobei im ersten Messmodus das Messpotential (5a) an der ersten Elektrode (E1) und das Schirmpotential (5b) an der zweiten Elektrode (E2), im zweiten Messmodus das Schirmpotential (5b) an der ersten Elektrode (E1) und das Messpotential (5a) an der zweiten Elektrode (E2) und im dritten Messmodus das Messpotential (5a) an der ersten und an der zweiten Elektrode (E1, E2) angelegt ist und in jedem der drei Messmodi das Gegenelektrodenpotential (5c) an der Gegenelektrode (1a) angelegt ist,
- wobei die Messelektronik (4) ferner eine mit dem Umschaltwerk (6) elektrisch verbundene Auswerteeinheit (7) umfasst, welche zur Steuerung des Umschaltwerks (6) und zur Berechnung des Füllstands basierend auf in der Messelektronik (4) gegenüber einem vollständig leeren Behälter (1) in jedem der drei Messmodi gemessenen relativen Kapazitätsänderungen eingerichtet ist.

2. Füllstandmessgerät nach Anspruch 1, **dadurch gekennzeichnet, dass** die erste Elektrode (E1) eine erste Länge (L1) und die zweite Elektrode eine zweite Länge (L2) aufweist, insbesondere derart, dass die zweite Länge (L2) größer als die erste Länge (L1) oder zumindest gleich groß wie die erste Länge (L1) ist.

3. Füllstandmessgerät nach Anspruch 1 oder 2, **dadurch gekennzeichnet, dass** die Füllstandsonde (3) einen Träger (3a) umfasst, auf welchem die erste und die zweite Elektrode (E1, E2) angebracht sind, wobei der Träger (3a) vorzugsweise als Stab oder Platine ausgebildet ist und vorzugsweise von mindestens einem elektrisch isolierenden Material (3b) umschlossen ist,
und/oder,
dass die Füllstandsonde (3) im Wesentlichen vertikal in dem Behälter, insbesondere in oder an der Behälterwand, montiert ist,
und/oder,
dass die Füllstandsonde (3) eine Schirmelektrode (S) aufweist, welche zwischen dem ersten Ende der ersten Elektrode (E1) und einem Boden des Behälters (1) angeordnet ist.

4. Füllstandmessgerät nach einem der Ansprüche 1-3, **dadurch gekennzeichnet, dass** die erste Elektrode (E1) und/oder die zweite Elektrode (E2) als einzelne Ringe oder Platten mit einem Isolator aufgebaut sind bzw. ist.

5. Verfahren zur Kalibrierung einer Füllstandsonde (3) für eine kapazitive Füllstandsmessung von Füllgut (2) in Form von Flüssigkeiten und/oder Schüttgütern in einem Behälter (1) mit einer von dem Behälter (1) umfassten Gegenelektrode (1a), wobei die Füllstandsonde (3) mit einer ersten Elektrode (E1) und einer zweiten Elektrode (E2) zur Kalibrierung in den Behälter (1) eingebracht wird,
sodass bei einem Befüllen des Behälters (1) zuerst die erste Elektrode (E1) mit Füllgut (2) bedeckt wird, bevor die zweite Elektrode (E2) zumindest teilweise mit Füllgut (2) bedeckt wird, und die erste und die zweite Elektrode (E1, E2) sich ihrer Länge nach nacheinander und voneinander beabstandet in den Behälter (1) hinein und im Wesentlichen parallel zu der Gegenelektrode (1a) erstrecken,
wodurch durch den gesamten, zwischen einem ersten, von der zweiten Elektrode (E2) entfernten Ende der ersten Elektrode (E1) und einem zweiten, von der ersten Elektrode (E1) entfernten Ende der zweiten Elektrode (E2) gebildeten Bereich eine Messstrecke definiert wird,
mit den Schritten
- Bereitstellen eines Messpotentials (5a), Schirmpotentials (5b) und Gegenelektrodenpotentials (5c),
- Anschließen der ersten und zweiten Elektrode (E1, E2) sowie der Gegenelektrode (1a) an eine Messelektronik (4),
- Anlegen des Gegenelektrodenpotentials (5c) an die Gegenelektrode (1a),
- Betreiben der ersten und zweiten Elektrode (E1, E2) in einem ersten, zweiten oder dritten Messmodus durch Umschalten zwischen einem an die erste und zweite Elektrode (E1, E2) der Füllstandsonde (3) jeweils anzulegenden Messpotential (5a) oder Schirmpotential (5b),
wobei im ersten Messmodus das Messpotential (5a) an der ersten Elektrode (E1) und das Schirmpotential (5b) an der zweiten Elektrode (E2), im zweiten Messmodus das Schirmpotential (5b) an die erste Elektrode (E1) und das Messpotential (5a) an die zweite Elektrode (E2) und im dritten Messmodus das Messpotential (5a) an die erste und an die zweite Elektrode (E1, E2) angelegt wird,
- Durchführen einer Kalibrationsmessung zur Kalibrierung der Füllstandsonde (3), wobei relative Kapazitätsänderungen zwischen einem vollständig leeren Behälter (1) und einem maximalen Füllstand, insbesondere einem Füllstand bis zu dem zweiten, von der ersten Elektrode (E1) entfernten Ende der zweiten Elektrode (E2), im zumindest ersten und dritten Messmodus ermittelt werden.

6. Verfahren gemäß Anspruch 5, **gekennzeichnet durch** den Schritt des Berechnens eines Kalibrationswerts anhand der zur Kalibrierung der Füllstandsonde (3) ermittelten relativen Kapazitätsänderungen, wobei die erste Elektrode (E1) eine erste Länge (L1) und die zweite Elektrode eine zweite Länge (L2) aufweist und der Kalibrationswert im Wesentlichen proportional zu einem Verhältnis der ersten Länge (L1) und der zweiten Länge (L2) zueinander ist.

7. Verfahren zur kapazitiven Füllstandsmessung von Füllgut (2) in Form von Flüssigkeiten und/oder Schüttgütern in einem Behälter (1) mit einer von dem Behälter (1) umfassten Gegenelektrode (1a),
wobei nach Einbringen einer Füllstandsonde (3) mit einer ersten Elektrode (E1) und einer zweiten Elektrode (E2) zur Füllstandsmessung in den Behälter (1) bei einem Befüllen des Behälters (1) zuerst die erste Elektrode (E1) mit Füllgut (2) bedeckt wird, bevor die zweite Elektrode (E2) zumindest teilweise mit Füllgut (2) bedeckt wird, und die erste und die zweite Elektrode (E1, E2) sich ihrer Länge nach nacheinander und voneinander beabstandet in den Behälter (1) hinein und im Wesentlichen parallel zu der Gegenelektrode (1a) erstrecken,
wodurch durch den gesamten, zwischen einem ersten, von der zweiten Elektrode (E2) entfernten Ende der ersten Elektrode (E1) und einem zweiten, von der ersten Elektrode (E1) entfernten Ende der zweiten Elektrode (E2) gebildeten Bereich eine Messstrecke (8) definiert ist, und
- nach Bereitstellen eines Messpotentials (5a), Schirmpotentials (5b) und Gegenelektrodenpotentials (5c),
- mit angeschlossener erster und zweiter Elektrode (E1, E2) sowie angeschlossener Gegenelektrode (1a) an eine Messelektronik (4)
- und mit angelegtem Gegenelektrodenpotential (5c) an die Gegenelektrode (1a) sowie kalibrierter Füllstandsonde (3), insbesondere nach dem Durchführen der Kalibrationsmessung gemäß dem in Anspruch 5 oder 6 beanspruchten Verfahren zur Kalibrierung der Füllstandsonde (3),
folgende Schritte umfasst sind:
- Betreiben der ersten und zweiten Elektrode (E1, E2) in einem ersten, zweiten oder dritten Messmodus durch Umschalten zwischen einem an die erste und zweite Elektrode (E1, E2) der Füllstandsonde (3) jeweils anzulegenden Messpotential (5a) oder Schirmpotential (5b),
wobei im ersten Messmodus das Messpotential (5a) an der ersten Elektrode (E1) und das Schirmpotential (5b) an der zweiten Elektrode (E2), im zweiten Messmodus das Schirmpotential (5b) an die erste Elektrode (E1) und das Messpotential (5a) an die zweite Elektrode (E2) und im dritten Messmodus das Messpotential (5a) an die erste und an die zweite Elektrode (E1, E2) angelegt wird,
- Durchführen wenigstens einer Füllstandsmessung, wobei relative Kapazitätsänderungen gegenüber einem vollständig leeren Behälter (1) bei einem Befüllen des Behälters (1) und/oder bei einem Entleeren des Behälters (1) in jedem der drei Messmodi gemessen und zur Berechnung des Füllstands herangezogen werden.

8. Verfahren nach Anspruch 5, 6 oder 7, **dadurch gekennzeichnet, dass** zumindest der erste und der dritte Messmodus während des Durchführens der Kalibrationsmessung gemäß Anspruch 5 oder 6 und/oder der erste, zweite und dritte Messmodus während des Durchführens der Füllstandsmessung gemäß Anspruch 7 jeweils zyklisch durchlaufen werden.

9. Verfahren zumindest nach Anspruch 7, **gekennzeichnet durch** den Schritt des Detektierens eines ersten Schwellwerts (S1) des Füllstands basierend auf im ersten Messmodus gemessenen relativen Kapazitätsänderungen, wobei der erste Schwellwert (S1) im Wesentlichem einem Füllstand (2b) bis zu dem ersten, von der zweiten Elektrode (E2) entfernten Ende der ersten Elektrode (E1) entspricht.

10. Verfahren zumindest nach Anspruch 7, **gekennzeichnet durch** den Schritt des Detektierens eines zweiten Schwellwerts (S2) des Füllstands basierend auf im zumindest ersten und zweiten Messmodus gemessenen relativen Kapazitätsänderungen, wobei der zweite Schwellwert (S2) im Wesentlichen einem Füllstand (2d) in einem Bereich entspricht, in welchem die erste und die zweite Elektrode (E1, E2) voneinander beabstandet sind.

11. Verfahren zumindest nach Anspruch 10, **gekennzeichnet durch** den Schritt des Berechnens einer maximalen relativen Kapazitätsänderung unter Annahme eines maximalen Füllstandes (2f), insbesondere einem Füllstand bis zu dem zweiten, von der ersten Elektrode (E1) entfernten Ende der zweiten Elektrode (E2), wobei der Schritt des Berechnens bei einem Füllstand zwischen dem zweiten Schwellwert (S2) und dem maximalen Füllstand durchgeführt wird und auf im ersten Messmodus jeweils gemessenen relativen Kapazitätsänderungen sowie auf einem Kalibrationswert der Füllstandsonde (3), insbesondere einem nach Anspruch 6 berechneten Kalibrationswert, basiert.

12. Verfahren zumindest nach Anspruch 10, **gekennzeichnet durch** den Schritt des Berechnens des jeweiligen Füllstands basierend auf im dritten Messmodus gemessenen relativen Kapazitätsänderungen bei einem Füllstand zwischen dem zweiten Schwellwert (S2) und einem maximalen Füllstand, welcher einer gemäß Anspruch 13 berechneten oder einer infolge des Durchführens der Kalibrationsmessung gemäß Anspruch 7 oder 8 ermittelten maximalen relativen Kapazitätsänderung entspricht.

13. Verfahren zumindest nach Anspruch 7, **dadurch gekennzeichnet, dass** während der Füllstandsmessung zwei verschiedene Algorithmen (A1, A2) ausgeführt werden, wobei zum Berechnen eines jeweils aktuellen Füllstands in Abhängigkeit von den hierzu gemessenen relativen Kapazitätsänderungen der jeweils auszuführende Algorithmus (A1, A2) ausgewählt wird.

14. Verfahren zumindest nach Anspruch 9, **dadurch gekennzeichnet, dass** ein erster Algorithmus (A1) zum Berechnen des Füllstands bei zunehmendem Füllstand zumindest bei Überschreiten des ersten Schwellwerts (S1) ausgeführt wird und dieser erste Algorithmus (A1) hierbei ein Verhältnis der jeweils im ersten Messmodus gemessenen relativen Kapazitätsänderung und der jeweils im zweiten Messmodus gemessenen relativen Kapazitätsänderung auswertet.

15. Verfahren zumindest nach einer Kombination der Ansprüche 9 und 10, **dadurch gekennzeichnet, dass** ein zweiter Algorithmus (A2) zum Berechnen des Füllstands
- bei zunehmenden Füllstand bei Überschreiten des zweiten Schwellwerts (S2)
- und bei abnehmenden Füllstand bis zum Unterschreiten des ersten Schwellwerts (S1) angewendet wird,
wobei ein Verhältnis zwischen der zumindest im dritten Messmodus gemessenen relativen Kapazitätsänderung und einer maximalen relativen Kapazitätsänderung unter Annahme eines maximalen Füllstandes auswertet wird, wobei die maximale relative Kapazitätsänderung vorzugsweise entweder gemäß Anspruch 11 berechnet oder infolge des Durchführens der Kalibrationsmessung gemäß Anspruch 5 oder 6 ermittelt wird.

## Claims

1. A filling level measuring device for capacitive filling level measurement of filling material (2) in the form of liquids and/or bulk materials in a container (1) that has a counter electrode (1a) integrated in the container (1);
comprising measuring electronics (4) and a filling level probe (3) connectable to the measuring electronics (4);
- wherein the filling level probe (3) includes a first electrode (E1) and a second electrode (E2) which have to be introduced into the container (1) for the filling level measurement and which, in their introduced state, extend into the container (1) one after the other in alignment along their longitudinal extension and spaced apart from each other and substantially parallel to the counter electrode (1a); so that
when the container (1) is being filled, the first electrode (E1) will first be covered by filling material (2) before the second electrode (E2) is at least partially covered by filling material (2), and
a measurement section is defined by the entire range between a first end of the first electrode (E1) remote from the second electrode (E2) and a second end of the second electrode (E2) remote from the first electrode (E1);
- wherein the measuring electronics (4) are configured to provide a measurement potential (5a), a shielding potential (5b), and a counter electrode potential (5c), and comprise a switching unit (6) including a first switch (6a) that is electrically connectable to the first electrode (E1) and a second switch (6b) that is electrically connectable to the second electrode (E2):
- wherein, for operating the filling level measuring device, the switching unit (6) is operable to set a first, second, or third measurement mode, by having the first switch (6a) adapted to switch over between the measurement potential (5a) or the shielding potential (5b) that can be applied to the first electrode (E1), and by having the second switch (6b) adapted to switch over between the measurement potential (5a) or the shielding potential (5b) that can be applied to the second electrode (E2), and wherein in the first measurement mode the measurement potential (5a) is applied to the first electrode (E1) and the shielding potential (5b) to the second electrode (E2), in the second measurement mode the shielding potential (5b) is applied to the first electrode (E1) and the measurement potential (5a) to the second electrode (E2), and in the third measurement mode the measurement potential (5a) is applied to the first and second electrodes (E1, E2) and in each of the three measurement modes the counter electrode potential (5c) is applied to the counter electrode (1a):
- wherein the measuring electronics (4) furthermore comprise an evaluation unit (7) that is electrically connected to the switching unit (6) and adapted to control the switching unit (6) and to calculate the filling level on the basis of relative changes in capacitance compared to a completely empty container (1) as measured by the measurement electronics (4) in each of the three measurement modes.

2. The filling level measuring device of claim 1, wherein the first electrode (E1) has a first length (L1) and the second electrode has a second length (L2), in particular such that the second length (L2) is greater than the first length (L1) or at least equal to the first length (L1).

3. The filling level measuring device of claim 1 or 2.
wherein the filling level probe (3) comprises a substrate (3a) on which the first and second electrodes (E1. E2) are attached, wherein the substrate (3a) is preferably in the form of a rod or circuit board and is preferably surrounded by at least one electrically insulating material (3b): and/or
wherein the filling level probe (3) is mounted substantially vertically in the container, in particular in or on the container wall: and/or
wherein the filling level probe (3) has a shielding electrode (S) which is arranged between the first end of the first electrode (E1) and a bottom of the container (1).

4. The filling level measuring device as claimed in any of claims 1 - 3.
wherein the first electrode (E1) and/or the second electrode (E2) are in the form of individual rings or plates with an insulator.

5. A method for calibrating a filling level probe (3) for a capacitive filling level measurement of filling material (2) in the form of liquids and/or bulk materials in a container (1) that includes a counter electrode (1a) integrated in the container (1);
wherein the filling level probe (3) is introduced into the container (1) with a first electrode (E1) and a second electrode (E2) for calibration,
such that when the container (1) is being filled, the first electrode (E1) will first be covered by filling material (2) before the second electrode (E2) is at least partially covered by filling material (2), and with the first and second electrodes (E1, E2) extending into the container (1) in longitudinal alignment one after the other and spaced apart from each other and substantially parallel to the counter electrode (1a),
thereby defining a measurement section by the entire range between a first end of the first electrode (E1) remote from the second electrode (E2) and a second end of the second electrode (E2) remote from the first electrode (E1);
comprising the steps of
- providing a measurement potential (5a), a shielding potential (5b), and a counter electrode potential (5c):
- connecting the first and second electrodes (E1. E2) and the counter electrode (1a) to measuring electronics (4);
- applying the counter electrode potential (5c) to the counter electrode (1a);
- operating the first and second electrodes (E1, E2) in a first, second, or third measurement mode by switching over between a measurement potential (5a) or a shielding potential (5b) that can be applied to the first and second electrodes (E1, E2), respectively, of the filling level probe (3);
wherein in the first measurement mode the measurement potential (5a) is applied to the first electrode (E1) and the shielding potential (5b) to the second electrode (E2), in the second measurement mode the shielding potential (5b) is applied to the first electrode (E1) and the measurement potential (5a) to the second electrode (E2), and in the third measurement mode the measurement potential (5a) is applied to the first and second electrodes (E1. E2):
- performing a calibration measurement in order to calibrate the filling level probe (3), wherein relative changes in capacitance between a completely empty container (1) and a maximum filling level, in particular a filling level up to the second end of the second electrode (E2) remote from the first electrode (E1), are determined in at least the first and third measurement modes.

6. The method according to claim 5, comprising the step of calculating a calibration value on the basis of the relative changes in capacitance as determined for calibrating the filling level probe (3), wherein the first electrode (E1) has a first length (L1) and the second electrode has a second length (L2), and wherein the calibration value is substantially proportional to a ratio of the first length (L1) to the second length (L2).

7. A method for capacitive filling level measurement of filling material (2) in the form of liquids and/or bulk materials in a container (1) that includes a counter electrode (1a) integrated in the container (1);
wherein, when a filling level probe (3) including a first electrode (E1) and a second electrode (E2) for filling level measurement has been introduced into the container (1), the first electrode (E1) is first covered by filling material (2) when the container (1) is being filled, before the second electrode (E2) is at least partially covered by filling material (2), and wherein the first and second electrodes (E1, E2) extend into the container (1) in longitudinal alignment one after the other and spaced apart from each other and substantially parallel to the counter electrode (1a),
thereby defining a measurement section (8) by the entire range between a first end of the first electrode (E1) remote from the second electrode (E2) and a second end of the second electrode (E2) remote from the first electrode (E1); and
- after providing a measurement potential (5a), a shielding potential (5b), and a counter electrode potential (5c).
- with the first and second electrodes (E 1. E2) connected and a counter electrode (1a) connected to measuring electronics (4).
- and with a counter electrode potential (5c) applied to the counter electrode (1a) and with the filling level probe (3) calibrated, in particular after performing the calibration measurement according to the method for calibrating the filling level probe (3) according to claim 5 or 6.
the method comprises the steps of:
- operating the first and second electrodes (E1. E2) in a first, second, or third measurement mode by switching over between a measurement potential (5a) or a shielding potential (5b) that can be applied to the first and second electrodes (E1. E2), respectively, of the filling level probe (3):
wherein in the first measurement mode the measurement potential (5a) is applied to the first electrode (E1) and the shielding potential (5b) to the second electrode (E2), in the second measurement mode the shielding potential (5b) is applied to the first electrode (E1) and the measurement potential (5a) to the second electrode (E2), and in the third measurement mode the measurement potential (5a) is applied to the first and second electrodes (E1, E2);
- performing at least one filling level measurement, by measuring relative changes in capacitance compared to a completely empty container (1) in each of the three measurement modes when the container (1) is being filled and/or when the container (1) is being emptied and using them for calculating the filling level.

8. The method of claim 5, 6 or 7, wherein at least the first and third measurement modes are cyclically executed during execution of the calibration measurement according to claim 5 or 6. and/or wherein the first, second, and third measurement modes are cyclically executed during execution of the filling level measurement according to claim 7.

9. The method of at least claim 7. comprising the step of detecting a first threshold (S1) of the filling level based on relative changes in capacitance as measured in the first measurement mode, wherein the first threshold (S1) substantially corresponds to a filling level (2b) up to the first end of the first electrode (E1) remote from the second electrode (E2).

10. The method of at least claim 7. comprising the step of detecting a second threshold (S2) of the filling level based on relative changes in capacitance as measured in at least the first and second measurement modes, wherein the second threshold (S2) substantially corresponds to a filling level (2d) in an area where the first and the second electrodes (E1, E2) are spaced apart from one another.

11. The method of at least claim 10. comprising the step of calculating a maximum relative change in capacitance assuming a maximum filling level (2f), in particular a filling level up to the second end of the second electrode (E2) remote from the first electrode (E1), wherein the step of calculating is carried out at a filling level between the second threshold (S2) and the maximum filling level and is based on relative changes in capacitance as measured in the first measurement mode and on a calibration value of the filling level probe (3), in particular a calibration value calculated according to claim 6.

12. The method of at least claim 10. comprising the step of calculating the respective filling level based on relative changes in capacitance as measured in the third measurement mode at a filling level between the second threshold (S2) and a maximum filling level which corresponds to the maximum relative change in capacitance as calculated according to claim 13 or as determined as a result of performing the calibration measurement according to claim 7 or 8.

13. The method of at least claim 7. wherein two different algorithms (A1, A2) are executed during the filling level measurement, wherein the respective algorithm (A1, A2) to be executed is selected for calculating a current filling level on the basis of the relative changes in capacitance measured for this purpose.

14. The method of at least claim 9. wherein, when the filling level is increasing, a first algorithm (A1) is executed for calculating the filling level at least when the first threshold (S1) is exceeded, and wherein this first algorithm (A1) evaluates a ratio of the respective relative change in capacitance as measured in the first measurement mode and the relative change in capacitance as measured in the second measurement mode.

15. The method at least according to a combination of claims 9 and 10.
wherein a second algorithm (A2) is applied for calculating the filling level
- when the filling level is increasing and when the second threshold (S2) is exceeded:
- and when the filling level is decreasing until the filling level falls below the first threshold (S1);
wherein a ratio between the relative change in capacitance as measured at least in the third measurement mode and a maximum relative change in capacitance is evaluated assuming a maximum filling level, wherein the maximum relative change in capacitance is preferably either calculated according to claim 11 or determined as a result of performing the calibration measurement according to claim 5 or 6.

## Revendications

1. Appareil de mesure de niveau de remplissage pour la mesure capacitive du niveau de remplissage d'un produit de remplissage (2) sous la forme de liquides et/ou de produits en vrac dans un contenant (1) avec une contre-électrode (1a) comprise par le contenant (1),
comprenant un système électronique de mesure (4) et une sonde de niveau de remplissage (3) pouvant être raccordée au système électronique de mesure (4),
- dans lequel sont réalisées sur la sonde de niveau de remplissage (3) une première électrode (E1) et une deuxième électrode (E2), lesquelles sont à introduire dans le contenant (1) pour la mesure de niveau de remplissage et s'étendent dans l'état introduit le long de leur longueur l'une après l'autre et à l'intérieur du contenant (1) à distance l'une de l'autre et de manière sensiblement parallèle à la contre-électrode (1a) si bien que
lors d'un remplissage du contenant (1), la première électrode (E1) est d'abord recouverte de produit de remplissage (2) avant que la deuxième électrode (E2) ne soit recouverte au moins en partie du produit de remplissage (2), et
un trajet de mesure est défini par la totalité de la zone formée entre une première extrémité, éloignée de la deuxième électrode (E2), de la première électrode (E1) et une deuxième zone formée par l'extrémité, éloignée de la première électrode (E1), de la deuxième électrode (E2),
- dans lequel le système électronique de mesure (4) est mis au point pour fournir un potentiel de mesure (5a), un potentiel de protection (5b) et un potentiel de contre-électrode (5c) et comprend un mécanisme de commutation (6) avec un premier commutateur (6a) pouvant être relié électriquement à la première électrode (E1) et un deuxième commutateur (6b) pouvant être relié électriquement à la deuxième électrode (E2),
- dans lequel un premier, un deuxième ou un troisième mode de mesure peut être réglé par le mécanisme de commutation (6) pour faire fonctionner l'appareil de mesure de niveau de remplissage en ce que le premier commutateur (6a) est réalisé pour commuter entre le potentiel de mesure (5a) ou le potentiel de protection (5b) pouvant être appliqué sur la première électrode (E1) et le deuxième commutateur (6b) est réalisé pour commuter entre le potentiel de mesure (5a) ou le potentiel de protection (5b) pouvant être appliqué sur la deuxième électrode (E2), et dans lequel dans le premier mode de mesure, le potentiel de mesure (5a) est appliqué sur la première électrode (E1) et le potentiel de protection (5b) est appliqué sur la deuxième électrode (E2), le potentiel de protection (5b) est appliqué dans le deuxième mode de mesure sur la première électrode (E1) et le potentiel de mesure (5a) est appliqué sur la deuxième électrode (E2) et dans le troisième mode de mesure, le potentiel de mesure (5a) est appliqué sur la première et sur la deuxième électrode (E1, E2) et le potentiel de contre-électrode (5c) est appliqué sur la contre-électrode (1a) dans chacun des trois modes de mesure,
- dans lequel le système électronique de mesure (4) comprend en outre une unité d'évaluation (7) reliée de manière électrique au mécanisme de commutation (6), laquelle est mise au point pour commander le mécanisme de commutation (6) et pour calculer le niveau de remplissage sur la base de modifications de capacité relatives mesurée dans chacun des trois modes de mesure par rapport à un contenant (1) totalement vide dans le système électronique de mesure (4).

2. Appareil de mesure de niveau de remplissage selon la revendication 1, **caractérisé en ce que** la première électrode (E1) présente une première longueur (L1) et la deuxième électrode présente une deuxième longueur (L2) en particulier de telle manière que la deuxième longueur (L2) est plus grande que la première longueur (L1) ou est au moins égale à la première longueur (L1).

3. Appareil de mesure de niveau de remplissage selon la revendication 1 ou 2, **caractérisé en ce que** la sonde de niveau de remplissage (3) comprend un support (3a), sur lequel la première et la deuxième électrode (E1, E2) sont installées, dans lequel le support (3a) est réalisé de préférence en tant que barre ou platine et est renfermé de préférence par au moins un matériau électriquement isolant (3b),
et/ou
que la sonde de niveau de remplissage (3) est montée de manière sensiblement verticale dans le contenant, en particulier dans ou sur la paroi de contenant,
et/ou
que la sonde de niveau de remplissage (3) présente une électrode de protection (S), laquelle est disposée entre la première extrémité de la première électrode (E1) et un fond du contenant (1).

4. Appareil de mesure de niveau de remplissage selon l'une quelconque des revendications 1 - 3, **caractérisé en ce que** la première électrode (E1) et/ou la deuxième électrode (E2) sont montées avec un isolant en tant que diverses bagues ou plaques.

5. Procédé pour étalonner une sonde de niveau de remplissage (3) pour une mesure capacitive du niveau de remplissage de produit de remplissage (2) sous la forme de liquides et/ou de produits en vrac dans un contenant (1) avec une contre-électrode (1a) comprise par le contenant (1),
dans lequel la sonde de niveau de remplissage (3) est introduite dans le contenant (1) avec une première électrode (E1) et une deuxième électrode (E2) pour l'étalonnage
si bien que lors d'un remplissage du contenant (1), d'abord la première électrode (E1) est recouverte de produit de remplissage (2) avant que la deuxième électrode (E2) ne soit recouverte au moins en partie de produit de remplissage (2), et la première et la deuxième électrode (E1, E2) s'étendent le long leur longueur l'une après l'autre et à distance l'une de l'autre à l'intérieur du contenant (1) et de manière sensiblement parallèle par rapport à la contre-électrode (1a),
ce qui permet de définir un trajet de mesure par la totalité de la zone formée entre une première extrémité, éloignée de la deuxième électrode (E2), de la première électrode (E1) et une deuxième extrémité, éloignée de la première électrode (E1), de la deuxième électrode (E2),
avec les étapes
- de fourniture d'un potentiel de mesure (5a), d'un potentiel de protection (5b) et d'un potentiel de contre-électrode (5c),
- de raccordement de la première et de la deuxième électrode (E1, E2) ainsi que de la contre-électrode (1a) à un système électronique de mesure (4),
- d'application du potentiel de contre-électrode (5c) à la contre-électrode (1a),
- de fonctionnement de la première et de la deuxième électrode (E1, E2) dans un premier, deuxième ou troisième mode de mesure par la commutation entre un potentiel de mesure (5a) ou un potentiel de protection (5b) à appliquer respectivement sur la première et la deuxième électrode (E1, E2) de la sonde de niveau de remplissage (3),
dans lequel dans le premier mode de mesure, le potentiel de mesure (5a) est appliqué sur la première électrode (E1) et le potentiel de protection (5b) est appliqué sur la deuxième électrode (E2), dans le deuxième mode de mesure le potentiel de protection (5b) est appliqué sur la première électrode (E1) et le potentiel de mesure (5a) est appliqué sur la deuxième électrode (E2) et dans le troisième mode de mesure le potentiel de mesure (5a) est appliqué sur la première et sur la deuxième électrode (E1, E2),
- de mise en œuvre d'une mesure d'étalonnage pour étalonner la sonde de niveau de remplissage (3), dans lequel des modifications de capacité relatives entre un contenant (1) totalement vide et un niveau de remplissage maximal, en particulier un niveau de remplissage jusqu'à la deuxième extrémité, éloignée de la première électrode (E1), de la deuxième électrode (E2), sont déterminées dans au moins le premier et le troisième mode de mesure.

6. Procédé selon la revendication 5, **caractérisé par** l'étape du calcul d'une valeur d'étalonnage à l'aide des modifications de capacité relatives déterminées pour étalonner la sonde de niveau de remplissage (3), dans lequel la première électrode (E1) présente une première longueur (L1) et la deuxième électrode présente une deuxième longueur (L2) et la valeur d'étalonnage est sensiblement proportionnelle par rapport à un rapport de la première longueur (L1) et de la deuxième longueur (L2).

7. Procédé pour la mesure capacitive de niveau de remplissage de produit de remplissage (2) sous la forme de liquides et/ou de produits en vrac dans un contenant (1) avec une contre-électrode (1a) comprise par le contenant (1),
dans lequel après l'introduction d'une sonde de niveau de remplissage (3) avec une première électrode (E1) et une deuxième électrode (E2) pour la mesure du niveau de remplissage dans le contenant (1) la première électrode (E1) est d'abord recouverte de produit de remplissage (2) lors d'un remplissage du contenant (1) avant que la deuxième électrode (E2) ne soit recouverte au moins en partie de produit de remplissage (2), et
la première et la deuxième électrode (E1, E2) s'étendent le long de leur longueur l'une après l'autre et à distance l'une de l'autre à l'intérieur du contenant (1) et de manière sensiblement parallèle à la contre-électrode (1a),
ce qui permet de définir un trajet de mesure (8) par la totalité de la zone formée entre une première extrémité, éloignée de la deuxième électrode (E2), de la première électrode (E1) et une deuxième extrémité, éloignée de la première électrode (E1), de la deuxième électrode (E2), et
- après la fourniture d'un potentiel de mesure (5a), d'un potentiel de protection (5b) et d'un potentiel de contre-électrode (5c),
- avec une première et une deuxième électrode (E1, E2) raccordées ainsi qu'une contre-électrode (1a) raccordée sur un système électronique de mesure (4),
- et avec un potentiel de contre-électrode (5c) appliqué sur la contre-électrode (1a) ainsi qu'avec une sonde de niveau de remplissage (3) étalonnée, en particulier après la mise en oeuvre de la mesure d'étalonnage selon le procédé revendiqué dans la revendication 5 ou 6, destiné à étalonner la sonde de niveau de remplissage (3),
des étapes suivantes sont comprises :
- le fonctionnement de la première et de la deuxième électrode (E1, E2) dans un premier, deuxième ou troisième mode de mesure par la commutation entre un potentiel de mesure (5a) ou un potentiel de protection (5b) à appliquer respectivement sur la première et la deuxième électrode (E1, E2) de la sonde de niveau de remplissage (3),
dans lequel dans le premier mode de mesure, le potentiel de mesure (5a) est appliqué sur la première électrode (E1) et le potentiel de protection (5b) est appliqué sur la deuxième électrode (E2), dans le deuxième mode de mesure, le potentiel de protection (5b) est appliqué sur la première électrode (E1) et le potentiel de mesure (5a) est appliqué sur la deuxième électrode (E2) et dans le troisième mode de mesure, le potentiel de mesure (5a) est appliqué sur la première et sur la deuxième électrode (E1, E2),
- la mise en œuvre d'au moins une mesure de niveau de remplissage, dans lequel des modifications de capacité relatives par rapport à un contenant (1) totalement vide lors d'un remplissage du contenant (1) et/ou lors d'une vidange du contenant (1) sont mesurées dans chacun des trois modes de mesure et sont prises en compte pour calculer le niveau de remplissage.

8. Procédé selon la revendication 5, 6 ou 7, **caractérisé en ce qu'**on passe respectivement de manière cyclique par au moins le premier et le troisième mode de mesure au cours de la mise en oeuvre de la mesure d'étalonnage selon la revendication 5 ou 6 et/ou par le premier, le deuxième et le troisième mode de mesure au cours de la mise en œuvre de la mesure du niveau de remplissage selon la revendication 7.

9. Procédé au moins selon la revendication 7, **caractérisé par** l'étape de la détection d'une première valeur de seuil (S1) du niveau de remplissage sur la base de modifications de capacité relatives mesurées dans le premier mode de mesure, dans lequel la première valeur de seuil (S1) correspond sensiblement à un niveau de remplissage (2b) jusqu'à la première extrémité, éloignée de la deuxième électrode (E2), de la première électrode (E1).

10. Procédé au moins selon la revendication 7, **caractérisé par** l'étape de la détection d'une deuxième valeur de seuil (S2) du niveau de remplissage sur la base de modifications de capacité relatives mesurées dans au moins le premier et le deuxième mode de mesure, dans lequel la deuxième valeur de seuil (S2) correspond sensiblement à un état de remplissage (2d) dans une zone, dans laquelle la première et la deuxième électrode (E1, E2) sont tenues à distance l'une de l'autre.

11. Procédé au moins selon la revendication 10, **caractérisé par** l'étape du calcul d'une modification de capacité relative maximale en supposant un niveau de remplissage maximal (2f), en particulier un niveau de remplissage jusqu'à la deuxième extrémité, éloignée de la première électrode (E1), de la deuxième électrode (E2), dans lequel l'étape du calcul est mise en œuvre pour un niveau de remplissage entre la deuxième valeur de seuil (S2) et le niveau de remplissage maximal et se base sur des modifications de capacité relatives mesurées respectivement dans le premier mode de mesure ainsi que sur une valeur d'étalonnage de la sonde de niveau de remplissage (3), en particulier une valeur d'étalonnage calculée selon la revendication 6.

12. Procédé au moins selon la revendication 10, **caractérisé par** l'étape du calcul du niveau de remplissage respectif sur la base de modifications de capacité relatives mesurées dans le troisième mode de mesure pour un niveau de remplissage entre la deuxième valeur de seuil (S2) et un niveau de remplissage maximal, lequel correspond à une modification de capacité relative maximale calculée selon la revendication 13 ou déterminée suite à la mise en oeuvre de la mesure d'étalonnage selon la revendication 7 ou 8.

13. Procédé au moins selon la revendication 7, **caractérisé en ce que** deux différents algorithmes (A1, A2) sont exécutés au cours de la mesure du niveau de remplissage, dans lequel l'algorithme (A1, A2) à exécuter respectivement est choisi pour calculer un niveau de remplissage respectivement instantané en fonction des modifications de capacité relatives mesurées à cet effet.

14. Procédé au moins selon la revendication 9, **caractérisé en ce qu'**un premier algorithme (A1) est exécuté pour calculer l'état de remplissage pour un niveau de remplissage qui augmente au moins lors du dépassement de la première valeur de seuil (S1) et ledit premier algorithme (A1) évalue dans le cas présent un rapport de la modification de capacité relative mesurée respectivement dans le premier mode de mesure et la modification de capacité relative mesurée respectivement dans le deuxième mode de mesure.

15. Procédé au moins selon une combinaison des caractéristiques 9 et 10, **caractérisé en ce qu'**un deuxième algorithme (A2) est appliqué pour calculer le niveau de remplissage
- pour un niveau de remplissage qui augmente en cas de dépassement de la deuxième valeur de seuil (S2),
- et pour un niveau de remplissage qui baisse jusqu'au non-dépassement de la première valeur de seuil (S1),
dans lequel un rapport entre l'au moins une modification de capacité relative mesurée au moins dans le troisième mode de mesure et une modification de capacité relative maximale est évalué en supposant un niveau de remplissage maximal, dans lequel la modification de capacité relative maximale est calculée de préférence soit selon la revendication 11 soit est déterminée suite à la mise en oeuvre de la mesure d'étalonnage selon la revendication 5 ou 6.
